# EUROPÄISCHE PATENTSCHRIFT

(11) **EP 0 642 732 B1**
(45) Veröffentlichungstag und Bekanntmachung des Hinweises auf die Patenterteilung: **23.06.1999**
(21) Anmeldenummer: 94113577.4
(22) Anmeldetag: 31.08.1994
(51) Int. Cl.: A01D 43/00, A01D 34/63

(54) **Boden-Bearbeitungsvorrichtung**
Soil-working apparatus
Dispositif pour le travail au sol

(30) Priorität: 09.09.1993 DE 4330567
(43) Veröffentlichungstag der Anmeldung: 15.03.1995
(73) Patentinhaber: Kress, Werner, D-89077 Ulm (DE)
(72) Erfinder: Katzer, Johann, D-89231 Neu-Ulm (DE); Lopic, Franz, D-89275 Nersingen (DE); Kress, Werner, D-89077 Ulm (DE); Lindermeir, Wolfgang, D-89617 Untermarchtal (DE); Stephany, Christian, D-89079 Ulm (DE)
(74) Vertreter: Patentanwälte Ruff, Beier, Schöndorf und Mütschele

(56) Entgegenhaltungen:
- EP-A- 0 034 359
- EP-A- 0 355 365
- EP-A- 0 464 809
- DE-A- 3 120 426
- GB-A- 2 115 666
- US-A- 3 183 653
- US-A- 3 596 450
- US-A- 3 693 333
- US-A- 3 945 176
- US-A- 3 946 543
- US-A- 4 344 273

## Beschreibung

Die Erfindung betrifft eine Boden-Bearbeitungs-Vorrichtung nach dem Oberbegriff des Anspruchs 1. Sie soll insbesondere von derjenigen flachen Bauweise sein, mit welcher Rasen von Gärten so gemäht werden, daß die mähende Person die Vorrichtung bzw. den Rasenmäher vor sich her führt bzw. schiebt oder hinter sich her zieht. Der Rasenmäher weist ein Laufgestell oder Fahrgestell auf, mit welchem er während der Arbeit eigenstabil derart auf dem Boden abgestützt werden kann, daß er gegen seitliche bzw. zur Vorschubrichtung etwa parallele Kippbewegungen sicher abgestützt ist und daher seine Arbeitswerkzeuge in konstanter Höhenlage parallel zum Boden bzw. zur Laufebene bewegt werden können. Rasenmäher mit zur Laufebene etwa rechtwinkliger Lage der Mähwerkzeug-Achse sind solchen mit zur Laufebene etwa paralleler Lage meist vorzuziehen, wobei das Mähwerkzeug Schlagmesser aufweist, für die kein Gegenwerkzeug erforderlich ist. Alle als nicht bevorzugt genannten Ausbildungen sind je nach den Erfordernissen ebenfalls denkbar.

Häufig besteht das Bedürfnis, mit einem Rasenmäher zusätzlich zum Mähen noch andere Arbeiten ausführen zu können, z.B. das sog. Vertikutieren, nämlich das Belüften des Bodens durch Herausreißen und/oder Herausschneiden von moos- bzw. schlingpflanzenartigem Bewuchs, das Zusammenkehren von gelösten Pflanzenteilen oder dgl.. Eine Durchführung dieser verschiedenen Arbeiten mit einem einzigen, als Ganzes gegenüber dem Fahrgestell bewegbaren Arbeitswerkzeug ist einer Durchführung mit gesonderten Arbeitswerkzeugen vorzuziehen, die ohne unmittelbar ineinander zu greifen im Abstand voneinander liegend gesondert gelagert sind.

Ferner ist einem Antrieb des jeweiligen Arbeitswerkzeuges über Laufräder des Fahrgestelles ein davon unabhängiger Antrieb vorzuziehen, weil dann die Geschwindigkeit der Arbeitsbewegung nicht von der Geschwindigkeit der Vorschubbewegung abhängt, sondern ggf. auch ohne Vorschubbewegung gearbeitet werden kann. Dies gilt insbesondere für die zum Mähen zusätzlichen Arbeiten, welche je nach Beschaffenheit des Bearbeitungsbereiches unterschiedlicher Vorschubgeschwindigkeiten bedürfen. Weist der Rasenmäher einen Lauf- bzw. Vorschubantrieb auf, so ist dieser daher zweckmäßig während des kontinuierlichen Weiterarbeitens des Arbeitswerkzeuges in der Geschwindigkeit steuerbar bzw. jederzeit ein- und ausschaltbar.

Zwar könnte man für die Durchführung der zusätzlichen Arbeiten ein gesondertes Fahrgestell vorsehen, auf welches der Rasenmäher als Ganzes so aufgesattelt wird, daß seine Abtriebswelle das Zusatzwerkzeug über ein Getriebe antreibt, jedoch befindet sich dann das Mähwerkzeug nicht in Bereitschafts- bzw. Arbeitsstellung, und außerdem ergeben sich ein sehr hoher baulicher Aufwand sowie ein hoher Aufwand für Umrüstungen auf die unterschiedlichen Betriebsweisen.

Die US-A-3 945 176 Zeigt eine Boden-Bearbeitungsvorrichtung mit einer seitlich abgeschirmten Mäheinrichtung und einer davor unabgeschirmt liegenden Vertikutiereinrichtung.

Demgegenüber ist durch die US-A-3 183 653 eine Boden-Bearbeitungsvorrichtung bekannt geworden, bei welcher die beiden Arbeitswerkzeuge der Mäheinrichtung und der Vertikutiereinrichtung in getrennten Gehäuseräumen angeordnet sind, welche jedoch gesonderte Seitenwandungen haben, die im Abstand hintereinander liegen. Die Vertikutiereinrichtung läuft als gesondertes Schleppaggregat hinter dem Rasenmäher.

Der Erfindung liegt auch die Aufgabe zugrunde, eine Boden-Bearbeitungsvorrichtung zu schaffen, bei welcher Nachteile bekannter Ausbildungen bzw. der beschriebenen Art vermieden sind und die insbesondere zusätzlich zum Mähen weitere Arbeiten mit hoher Intensität bzw. hohem Wirkungsgrad im wesentlichen unabhängig davon ermöglicht, ob bzw. wie schnell die Vorrichtung in der jeweiligen Vorschubrichtung gegenüber dem Boden bewegt wird. Ferner sollen die einzelnen Arbeitswerkzeuge ohne Umrüstarbeiten bzw. gegenseitige Lageverstellung und ggf. nur durch einfache manuelle Schaltvorgänge wahlweise in und außer Arbeitseingriff gebracht werden können.

Erfindungsgemäß sind die Merkmale nach Anspruch 1 vorgesehen. Mindestens ein Zusatzwerkzeug ist unabhängig von der Vorschubbewegung des Fahrgestelles antreibbar und/oder z.B. dadurch gemeinsam mit dem Mähwerkzeug vollständig in ein gemeinsames Fahrgestell integriert, daß es wie das Mähwerkzeug im wesentlichen nur in seinem Arbeitsbereich frei liegt, ansonsten aber an der Vorderseite, im oberen Bereich und/oder seitlich so abgedeckt ist, daß Verletzungsgefahren durch unmittelbare Berührung weitestgehend vermieden sind. Eine vorteilhafte bauliche Integrierung ergibt sich auch, wenn ein gemeinsamer Antrieb bzw. Antriebsmotor für das Mähwerkzeug und das Zusatzwerkzeug vorgesehen sind, wobei die Antriebsverbindung zwischen Motor und Zusatzwerkzeug auch dann gegeben sein kann, wenn das Mähwerkzeug in Arbeitslage montiert ist bzw. im rotierenden Arbeitseinsatz steht. Dadurch ist es möglich, mit beiden Arbeitswerkzeugen gleichzeitig oder mit jedem der Arbeitswerkzeuge unabhängig vom anderen zu arbeiten.

Besonders zweckmäßig ist es, wenn das Zusatzwerkzeug unmittelbar vor dem Flugkreisdurchmesser des Mähwerkzeuges und/oder hinter einer vordersten Gehäusewand bzw. Begrenzung des Chassis' des Fahrgestelles angeordnet ist, so daß sich trotz Anordnung des Zusatzwerkzeuges gegenüber einem Rasenmäher ohne ein solches Zusatzwerkzeug nur eine sehr geringfügige Vergrößerung der Gesamtlänge ergibt. In Seitenansicht kann dabei der Abstand der Vorderräder bzw. des Zusatzwerkzeuges vom Flugkreisdurchmesser des Mähwerkzeuges etwa gleich groß wie der entsprechende Abstand der Hinterräder sein. Dieser Abstand beträgt zweckmäßig nur einen Bruchteil des Flugkreisradius' des Zusatzwerkzeuges, der seinerseits zweckmäßig wesentlich kleiner als derjenige des Mähwerkzeuges ist.

Um zu vermeiden, daß das Zusatzwerkzeug härtere Teile, wie Steine, in das laufende Mähwerkzeug schleudert, ist zweckmäßig zwischen beiden Arbeitswerkzeugen eine Abschirmung vorgesehen, die im tiefsten Bereich und oberhalb der Laufebene nur durch eine einzige dünne, aufrechte Trennwand gebildet sein kann und zwei nach unten offen napf- bzw. rinnenförmige Gehäuseräume für die beiden Arbeitswerkzeuge voneinander trennt.

Um das Zusatzwerkzeug an die jeweiligen Gegebenenheiten des zu bearbeitenden Bodens anpassen zu können, liegt der durch seinen untersten Bereich gebildete Arbeitsbereich zweckmäßig in mindestens einer Arbeitslage tiefer als die durch Laufräder oder dgl. bestimmte Laufebene, so daß das Zusatzwerkzeug verhältnismäßig tief in den Boden eingreifen und diesen ggf. auflockern kann. Besonders vorteilhaft ist es, wenn beide Arbeitswerkzeuge gemeinsam quer zur Laufebene stufenlos verstellbar und in jeder Lage festsetzbar sind, wobei gegenüber einer eine Kippbewegung des jeweiligen Arbeitswerkzeuges einschließenden Verstellbewegung eine solche zu bevorzugen ist, bei welcher beide Arbeitswerkzeuge jeweils um gleiche Höhenbeträge verstellt werden.

Dies kann z.B. dadurch erreicht werden, daß in nur zwei Radachsen vorgesehene Laufräder, insbesondere vor und hinter dem Mähwerkzeug, seitlich und innerhalb der Arbeitsbreite des Mähwerkzeuges liegende Laufräder gemeinsam gegenüber dem Chassis des Fahrgestelles höhenverstellbar sind, wobei ihre Stellbewegung eine Schwenkbewegung um eine zur jeweils zugehörigen Radachse etwa parallele Stellachse sein kann. Diese Stellachse liegt vorteilhaft vor dem Zusatzwerkzeug und/oder etwa in Höhe von dessen Werkzeugachse, wobei zweckmäßig achsgleiche und/oder hintereinander liegende Laufräder hinsichtlich der Höhenverstellung miteinander zwangsverbunden bzw. über eine gemeinsame Stell-Handhabe zu verstellen sind.

Das Zusatzwerkzeug und insbesondere dessen Arbeitszinken können durch die vorderen Bodenlaufräder des Fahrgestelles großflächig abgeschirmt sein, so daß sie kaum einen Fuß der Bedienungsperson erfassen können, der von einem solchen Laufrad überrollt wird. Das Zusatzwerkzeug ist gegenüber dem jeweiligen benachbarten Laufrad aber auch zusätzlich noch durch eine äußerste Seitenwand des Chassis' bzw. Fahrgestell-Gehäuses abgeschirmt, welche die Lagerung des Zusatzwerkzeuges und die Stellachse tragen kann. Über die Unterseite dieses Gehäuses steht das Zusatzwerkzeug höchstens mit einem Drittel bis einem Viertel seines Durchmessers vor. Außerdem kann die Radachse des jeweiligen vorderen Laufrades vor der Werkzeugachse des Zusatzwerkzeuges bzw. näher benachbart zu dem Flugkreisdurchmesser liegen, wodurch sich ein noch besserer Unfallschutz ergibt.

Während das Mähwerkzeug zweckmäßig getriebelos unmittelbar von der Abtriebswelle des Motors angetrieben wird, ist für das Zusatzwerkzeug statt eines gesonderten Motors ein Getriebe vorgesehen, das von dieser Motorwelle angetrieben wird, wobei zweckmäßig die größte Strecke der Getriebeverbindung oberhalb des jeweiligen Arbeitswerkzeuges liegt. Z.B. kann in einer zur Laufebene etwa rechtwinkligen Axialebene des gegenüber dem Chassis lagefest gelagerten Zusatzwerkzeuges bzw. im Abstand vor der Motor-Abtriebswelle eine Zwischenwelle gelagert sein, die über eine Getriebestufe angetrieben wird und über eine weitere Getriebestufe das Zusatzwerkzeug antreibt.

Dadurch können diese beiden Getriebestufen mit größerem Abstand, z.B. um etwa die Hälfte der Länge des Zusatzwerkzeuges, gegeneinander versetzt sein. Anstatt die Getriebeverbindung durch miteinander kämmende Getrieberäder, durch Gelenkwellen oder dgl. zu bilden, weist sie zweckmäßig zur Überbrückung der größeren Verbindungsstrecken endlos umlaufende Zugorgane, z.B. Riemen, auf. Statt formschlüssig wirkender Zugorgane, wie Zahnriemen, können solche Zugorgane vorgesehen sein, die ab einer bestimmten Belastung Schlupf haben und dadurch eine Überlastsicherung bewirken. Die jeweilige Getriebestufe ist wie die Zwischenwelle vorteilhaft in einem Getrieberaum angeordnet, der vom jeweiligen Gehäuseraum für die Arbeitswerkzeuge im wesentlichen vollständig getrennt ist, so daß Schmutz oder dgl. aus diesem Gehäuseraum nicht in den Getrieberaum gelangen kann.

Vorteilhaft ist auf die im wesentlichen geschlossenen Oberseiten der Gehäuseräume für die Arbeitswerkzeuge ein diese Gehäuseräume bzw. Oberseiten abdeckender, haubenförmiger Deckel aufgesetzt, der den Getrieberaum wenigstens einer Getriebestufe auf dem größten Teil seiner Höhe begrenzt, so daß nach zerstörungsfreier Abnahme dieses Deckels die Getriebestufe von oben sowie seitlich über den ganzen Umfang zugänglich ist, wie das zur Wartung, Spannung und zum Wechseln des Riemens zweckmäßig sein kann.

Um mit dem jeweiligen Arbeitswerkzeug allein bzw. unabhängig vom anderen Arbeitswerkzeug arbeiten zu können, ist es bzw. das andere Arbeitswerkzeug zweckmäßig dadurch hinsichtlich seiner Arbeitsbewegung abschaltbar, daß in seiner Antriebsverbindung eine manuell ein- und ausrückbare Schaltkupplung vorgesehen ist. Diese kann als reibungs- und/oder formschlüssig wirkende Klauenkupplung ausgebildet sein und ist zweckmäßig zur Ausrückstellung federbelastet, so daß sie sehr schnell geöffnet werden kann. Dadurch kann der Antriebsmotor ständig laufen, und trotzdem kann z.B. das Zusatzwerkzeug abgeschaltet und nur mit dem Mähwerkzeug gearbeitet werden. Soll dagegen im wesentlichen nur mit dem Zusatzwerkzeug gearbeitet werden, so erfolgt dies dadurch, daß mit dem Mähwerkzeug das Gras zunächst auf eine vorgegebene Schnitthöhe abgeschnitten wird, wonach beim nochmaligen Überfahren dieses Grases das Mähwerkzeug bei gleichbleibender oder größerer Arbeitshöhe nicht mehr schneidet, sondern nur noch das Zusatzwerkzeug greift. Dieses kann so ohne Höhenverstellbarkeit hinsichtlich seiner Arbeits- bzw. Werkzeugachse lagefest am Chassis angeordnet sein.

Gegenüber einer Anordnung, bei welcher die beiden Mähwerkzeuge aneinander vorbei auf gesonderten Wegen die gelösten Pflanzenteile aus ihrem Bereich befördern, ist eine Anordnung zu bevorzugen, bei welcher das Zusatzwerkzeug diese Pflanzenteile in den Arbeitsbereich des Mähwerkzeuges übergibt, das seinerseits dann die vom Zusatzwerkzeug gelösten Pflanzenteile weiterbefördert, z.B. in einen am Chassis angeordneten Sammelbehälter, der zur Entleerung abnehmbar ist. Die verhältnismäßig groben, vom Zusatzwerkzeug gelösten Pflanzenteile können dadurch im Flug durch das Mähwerkzeug nochmals zerkleinert und so besonders günstig gesammelt werden.

Der Antrieb des Zusatzwerkzeuges kann im Abstand zwischen dessen Enden und/oder an mindestens einem Ende erfolgen, wobei auch die zugehörige Getriebestufe zweckmäßig in einem vom Gehäuseraum des Zusatzwerkzeuges im wesentlichen gesonderten Getrieberaum liegt. Auch diese Getriebestufe kann im wesentlichen durch ein umlaufendes Zugorgan der beschriebenen Art gebildet sein. Des weiteren kann die Schaltkupplung in vorteilhafter Weise unmittelbar auf der Zwischenwelle angeordnet sein, wobei zweckmäßig ein Getriebeglied unmittelbar durch die zugehörige Riemenscheibe gebildet und kein gesondertes Kupplungsglied erforderlich ist. Für die jeweilige Getriebestufe ist auch ein Rundschnur-, ein Flachband-, ein Dreikant-, ein Vierkant- oder ein anderer Riemen denkbar, wobei gegenüber einer Anordnung mit einer Spannrolle oder dgl. eine solche zu bevorzugen ist, bei welcher kein von den im Antriebs-Kraftfluß liegenden Umlenkungen gesondertes Spannglied für das Zugorgan vorgesehen ist.

Vorteilhaft hat das flexible Zugorgan einen niedrigen positiven bzw. negativen thermischen Ausdehnungskoeffizienten, um die Notwendigkeit einer Nachspannung nach bestimmten Betriebszeiten zu vermeiden. Zur Riemenspannung ist es auch denkbar, die konischen Eingriffsflanken einer Umlenkung des Riemens axial gegeneinander verstellbar auszubilden, so daß der zugehörige Umlenkradius stufenlos verändert werden kann. Statt eines Zugorganes aus einem gummielastischen Werkstoff kann auch eine dehnungsarme Textilschnur verwendet werden. Ferner ist die Verwendung eines Zugorganes aus Polyester denkbar.

Unabhängig von den beschriebenen Ausbildungen betrifft die Erfindung auch eine vorteilhafte Ausbildung des Zusatzwerkzeuges, das zweckmäßig Arbeitszinken aus Federstahldraht oder einem Werkstoff mit ähnlichen Eigenschaften aufweist. Der Querschnittsdurchmesser dieser Arbeitszinken beträgt zweckmäßig zwischen 0,8 bis 1,2 mm. Das Zusatzwerkzeug kann in Modulbauweise aus einzelnen Bausteinen bzw. Werkzeugkörpern zusammengesetzt sein, die alle im wesentlichen gleich ausgebildet und in beliebiger Reihenfolge axial aneinander zu gliedern sind.

Jeder Werkzeugkörper kann dabei wahlweise in einer von acht zueinander versetzten Drehlagen so auf eine Werkzeug- bzw. Profilwelle aufgesetzt werden, daß er in der jeweiligen Drehlage gegenüber dieser Profilwelle gegen Verdrehen formschlüssig gesichert ist, jedoch axial verschoben werden kann und für die Drehsicherung nicht des stirnseitigen Eingriffes in einen benachbarten Werkzeugkörper bedarf. Zweckmäßig sind dabei mindestens so viele Werkzeugkörper vorgesehen, daß die Summe aller Winkel ihrer möglichen Drehlagen 360° ergibt, wobei darüberhinaus ein zusätzlicher Werkzeugkörper vorgesehen sein kann. Dadurch wird während eines Umlaufes eine sehr gleichmäßige und niedrige Belastung des Zusatzwerkzeuges gewährleistet.

Jeder Werkzeugkörper trägt zweckmäßig mehrere Arbeitszinken in Achsrichtung nebeneinander und/oder in Umfangsrichtung etwa diametral gegeneinander versetzt, so daß z.B. jeweils nur drei Arbeitszinken gleichzeitig in Arbeitseingriff gelangen. Bevor sich diese Arbeitszinken aufgrund ihrer federnden Auslenkung vom Boden wieder schlagartig rückfedernd lösen, haben schon die in Umfangsrichtung nachfolgenden sowie axial unmittelbar benachbarten Arbeitszinken begonnen, in Eingriff mit dem Boden zu gelangen und sich nach Art gezogener Schleppzinken entlang des Bodens zu bewegen.

Die axial nebeneinander liegenden Arbeitszinken des jeweiligen Werkzeugkörpers können auf einem gemeinsamen Lager- bzw. Sicherungsglied angeordnet sein, z.B. einem Hohlniet, der Federwindungen am Fuß des jeweiligen Arbeitszinkens sowie radial vorstehende Flansche des zugehörigen Nabenkörpers durchsetzt und auch nur an seiner der Werkzeugachse zugekehrten Mantellinie an solchen Flanschen im Abstand zwischen seinen Enden abgestützt sein kann. Die Federwindungen des jeweiligen Arbeitszinkens können im wesentlichen axialspielfrei zwischen Flansche der genannten Art eingreifen, so daß eine axiale Aufdehnung dieser Federwindungen nicht möglich ist.

Gegenüber einer Anordnung, bei welcher mehr als zwei jeweils in einer Werkzeugachse angeordnete Arbeitswerkzeuge vorgesehen sind, ist eine solche Anordnung zu bevorzugen, bei welcher nur zwei Arbeitswerkzeuge vorgesehen sind. Das um eine zur Vorschubrichtung quer liegende Achse drehbare Zusatzwerkzeug bildet dabei im Mähbetrieb das vorderste Arbeitswerkzeug des Rasenmähers. Ein verhältnismäßig großer Flugkreisdurchmesser des Zusatzwerkzeuges kann erreicht werden, wenn die höchste Stelle dieses Flugkreisdurchmessers bei höchster Lage des Zusatzwerkzeuges gegenüber der Laufebene etwa in Höhe der höchsten Stelle mindestens eines Laufrades liegt. Bei tiefster Einstellung des Chassis' gegenüber dem Laufrad kann dessen höchste Stelle etwa in Höhe der Oberseite des Getriebegehäuses liegen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: eine erfindungsgemäße Vorrichtung in Seitenansicht,
- Fig. 2: den Rasenmäher gemäß Fig. 1 in Draufsicht,
- Fig. 3: einen Längsschnitt durch einen Teil des Rasenmähers gemäß Fig. 2,
- Fig. 4: eine weitere Ausführungsform in einer Darstellung entsprechend Fig. 3,
- Fig. 5: einen Ausschnitt des Rasenmähers gemäß Fig. 4 in teilweise geöffneter Draufsicht,
- Fig. 6: einen Schnitt durch den Rasenmäher gemäß Fig. 5,
- Fig. 7: ein Zusatzwerkzeug in Axialansicht,
- Fig. 8: einen Axialschnitt durch das Zusatzwerkzeug gemäß Fig. 7,
- Fig. 9: eine weitere Ausführungsform in einer Darstellung entsprechend Fig. 6,
- Fig. 10: das Zusatzwerkzeug gemäß Fig. 9 in Axialansicht,
- Fig. 11: eine weitere Ausführungsform eines Zusatzwerkzeuges im Axialschnitt und
- Fig. 12: das Zusatzwerkzeug gemäß Fig. 11 in Axialansicht.

Der Rasenmäher 1 weist ein in Draufsicht länglich rechteckiges Fahrgestell 2 mit einem im wesentlichen geschlossenen gehäuseförmigen Chassis 3 auf, an dessen vorderem und hinterem Ende seitlich je zwei Bodenläufer 4, 5, nämlich Räder, im wesentlichen frei liegend um zwei parallele Radachsen drehbar gelagert sind, wobei die beiden Räder 4, 5 auf jeder Seite etwa in derselben Spur laufen und die hinteren Räder größere Durchmesser haben können. Vor den hinteren Rädern 5 sind hintereinander arbeitend zwei Arbeitseinrichtungen 6, 7 vorgesehen und an der Oberseite, an den Seiten sowie an der Vorder- und Rückseite gemeinsam durch das Chassis 3 im wesentlichen vollständig durch über beide Arbeitseinrichtungen 6, 7 durchgehende Gehäusewandung abgedeckt.

Unmittelbar im vorderen Endteil des Chassis 3 und annähernd an dessen vorderes Ende anschließend bzw. im wesentlichen zwischen den vorderen Rädern 4 ist als Arbeitseinrichtung eine Vertikutiereinrichtung 6 vorgesehen, deren als Zusatzwerkzeug 8 ausgebildetes Arbeitswerkzeug in Draufsicht etwa bis an die hinteren Enden der Räder 4 reicht, das zwischen seinen Enden über die gesamte zugehörige Arbeitsbreite im wesentlichen kontinuierlich durchgeht, und das im wesentlichen symmetrisch zu der zur Längsmittelebene des Fahrgestelles 2 parallelen Mittelebene des Arbeitsbereiches des dahinter liegenden Mähwerkzeuges 9 der Mäheinrichtung 7 liegt. In Draufsicht reicht der Flugkreis bzw. Arbeitsbereich dieses Mähwerkzeuges 9 bis auf einen geringen Spaltabstand an den hinteren Umfang des Zusatzwerkzeuges 8, während das hintere Ende dieses Arbeitsbereiches annähernd bis an das vordere Ende der hinteren Räder 5 reicht.

Seitlich reicht der Arbeitsbereich des Mähwerkzeuges 9 annähernd bis an die zugehörigen seitlichen Außenbegrenzungen des Chassis' 3, welche im Bereich der Räder 4, 5 um geringfügig mehr als deren Radbreite nach innen versetzt sind, so daß die Arbeitsbreite des Zusatzwerkzeuges 8 etwa um das Doppelte dieser Radbreite kleiner als die Arbeitsbreite des Mähwerkzeuges 9 ist. Wird ein Rasen nacheinander in nebeneinanderliegenden Streifen bearbeitet, so kann beim Bearbeiten des jeweils nächst folgenden Streifens der Rasenmäher 1 so geführt werden, daß die auf der zugehörigen Seite liegenden Räder 4, 5 auf dem bereits bearbeiteten Streifen mit ihren Innenseiten entlang dessen Längsbegrenzung laufen und die Arbeitsbreite des Mähwerkzeuges 9 den bereits bearbeiteten Streifen nochmals über eine Breite erfaßt, die etwa der Radbreite entspricht. Die Arbeitsbreite des Zusatzwerkzeuges 8 schließt dann im wesentlichen unmittelbar an die Längskante des bereits bearbeiteten Streifens an, so daß sich ein guter Wirkungsgrad ergibt und vermieden ist, daß durch das Zusatzwerkzeug 8 Streifenbereiche doppelt bearbeitet werden.

Die Unterseiten bzw. Abrollzonen der Räder 4, 5 bestimmen eine Laufebene 10 des Rasenmähers 1, und zu dieser Laufebene 10 liegt die Arbeitsachse 11 des Zusatzwerkzeuges 8 parallel sowie rechtwinklig zur Verbindungsgeraden zwischen den beiden Arbeitswerkzeugen 8, 9. Die Arbeitsachse 12 des Mähwerkzeuges 9 dagegen liegt rechtwinklig zur Laufebene 10, so daß das Mähwerkzeug 9 in einer zur Laufebene 10 parallelen Arbeitsebene 14 seine Arbeitsbewegung ausführt. Das Mähwerkzeug 9 ist z.B. durch zwei oder mehr radial frei ausragende, zur Arbeitsebene 14 flach plattenförmige Schlagmesser gebildet. Die zur Laufebene 10 parallele Arbeitsebene 13 des Zusatzwerkzeuges 8 liegt meist tiefer als die Ebenen 10, 14 und ist nicht wie beim Mähwerkzeug 9 durch eine Stirnseite, sondern durch die tiefste Stelle des Außenumfanges des Zusatzwerkzeuges 8 bestimmt. Die zur Laufebene 10 und zur Arbeitsachse 11 etwa parallele gemeinsame Radachse 15 der Räder 4 kann etwa in gleicher Höhe wie die Arbeitsachse 11 und gegenüber dieser um ein Maß nach vorne versetzt sein, das in der Größenordnung des Flugkreisradius' des Zusatzwerkzeuges 8 liegt. Durch die nicht lenkbaren Räder 4, 5 ist eine Haupt-Vorschubrichtung 16 des Rasenmähers 1 bestimmt, welche sich dadurch ergibt, daß die den Rasenmäher 1 führende Person hinter dem Rasenmäher zu Fuß mitgeht. Zur Vorschubrichtung 16 liegt die Arbeitsachse 11 etwa rechtwinklig.

Der Durchmesser des äußersten Flugkreises 17 des Zusatzwerkzeuges 8 beträgt etwa Dreiviertel des Durchmessers der Räder 4, so daß er in Draufsicht nicht über dessen vordere Enden vorsteht, sondern durch seine gegenüber den Laufrädern 4 exzentrische Lage allenfalls nach hinten und im Abstand oberhalb der Laufebene 10 über die hinteren Enden der Räder 4 vorstehen kann. Der kleinste Abstand zwischen den Flugkreisdurchmessern der beiden Arbeitswerkzeuge 8, 9 ist wesentlich kleiner als der Durchmesser des Flugkreises 17 sowie wesentlich kleiner als der Flugkreisradius des Zusatzwerkzeuges 9 und kann in der Größenordnung eines Fünftels des Durchmessers des Flugkreises 17 bzw. eines Zehntels des Flugkreisradius' des Mähwerkzeuges 9 liegen, dessen Flugkreisdurchmesser etwa viermal so groß wie der des Zusatzwerkzeuges 8 ist.

Das Mähwerkzeug 9 ist am unteren Ende einer Mähwelle 18 angeordnet, welche an einem an der Oberseite des Chassis' 3 befestigten Motorflansch 19 gelagert und über eine Antriebsanordnung 20 anzutreiben ist. Der zugehörige, durch einen Elektromotor oder einen Verbrennungsmotor gebildete Antriebsmotor 22 liegt zweckmäßig mit seiner Abtriebswelle etwa rechtwinklig zur Laufebene 10 bzw. in der Arbeitsachse 12, so daß diese Abtriebswelle unmittelbar die Mähwelle 18 bilden oder tragen kann, an welcher das Mähwerkzeug 9 durch eine Stirnschraube leicht auswechselbar befestigt ist.

Am hinteren Ende des Chassis' 3 ist eine bügelförmige Führungs-Handhabe 21 mit ihren beiden vorderen seitlichen Schenkeln gelenkig befestigt, die oberhalb und hinter dem Chassis 3 einen Führungsgriff bilden, über welchen die Antriebsanordnung 20 ein- und ausgeschaltet werden kann. Zweckmäßig ist für den Betrieb der Antriebsanordnung 20 mit dem Führungsgriff gleichzeitig eine Sicherungs-Handhabe in einer Einschaltstellung zu halten, so daß beim Loslassen des Führungsgriffes zwangsläufig auch diese Handhabe freigegeben und selbsttätig in ihre Ausschaltstellung überführt wird, die einen sofortigen Stillstand bzw. eine Antriebsunterbrechung der Arbeitswerkzeuge 8, 9 zur Folge hat.

Unmittelbar unterhalb des Antriebsmotors 22 weist die Mähwelle 18 zur Bildung eines Riemenrades 23 eine im Querschnitt z.B. trapezförmige Umfangsnut auf, und von diesem Riemenrad 23 kann das Zusatzwerkzeug 8 über ein Getriebe 24 angetrieben werden. Das einstufige Getriebe 24 weist zwei im Winkel zueinander liegende Getriebestrecken 25, 26 auf, welche durch eine Zwischenwelle 27 gegeneinander abgesetzt sind. Diese Zwischenwelle 27 trägt oberhalb des Zusatzwerkzeuges 8 und gegenüber diesem geringfügig nach hinten versetzt, jedoch vor dem Mähwerkzeug 9, zwei achsgleich nebeneinanderliegende und unabhängig voneinander drehbare Riemenscheiben 28, 29. Eine entsprechende Riemenscheibe 31 ist mit Abstand zwischen den Enden des Zusatzwerkzeuges 8 bzw. etwa in der Mitte von dessen Länge angeordnet. Von dem Riemenrad 23 ist durchgehend bis zur Riemenscheibe 31 ein umlaufender Treibriemen 32, z.B. ein Rundschnurriemen, geführt, dessen beide Trume gesondert über die Oberseiten der beiden Riemenscheiben 28, 29 über etwa 90° umgelenkt sind und der die Riemenscheibe 31 über einen Bogenwinkel von mindestens 180° umschlingt. Die Zwischenwelle 27 liegt rechtwinklig zur Abtriebswelle 18 bzw. parallel zur Arbeitsachse 11, so daß das Getriebe 24 nach Art eines Winkelgetriebes arbeitet. Die Riemenscheiben 28, 29 können auf einer gemeinsamen Welle oder Achse mit Lagern 34 gelagert sein.

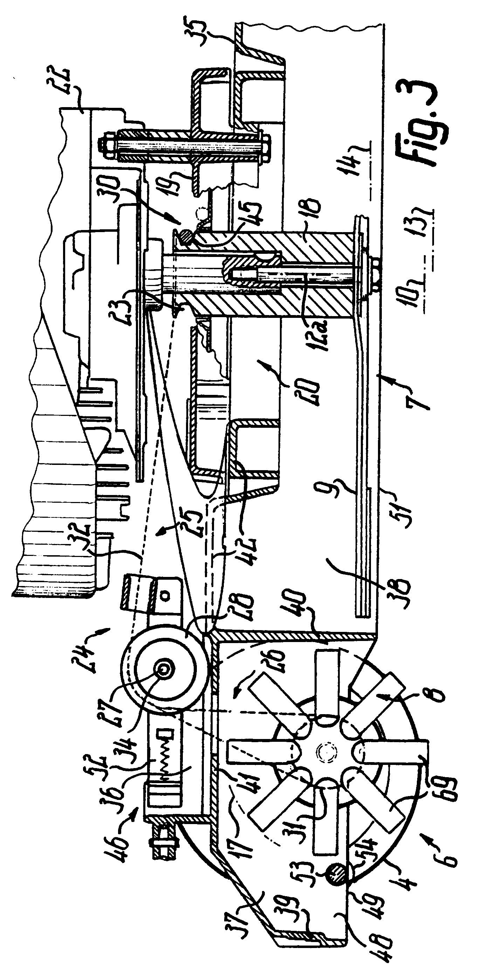

Das Chassis 3 bildet ein vom vorderen bis zum hinteren Ende des Rasenmähers 1 durchgehendes Gehäuse 35, welches jedoch gesonderte Gehäuseräume begrenzt. Das Getriebe 24 ist im wesentlichen in einem Getrieberaum 36 angeordnet, der in Fig. 3 geöffnet dargestellt und gegenüber den Arbeitswerkzeugen 8, 9 im wesentlichen geschlossen bzw. nur dort geöffnet ist, wo die Abtriebswelle 18 bzw. die zum Zusatzwerkzeug 8 führenden Antriebsverbindungen durchgeführt sind. Das Zusatzwerkzeug 8 ist in einem gesonderten Gehäuseraum 37 angeordnet, der unterhalb des vorderen Endes des Getrieberaumes 36 liegt und im wesentlichen nur nach unten napfförmig offen ist. Unmittelbar hinter dem Gehäuseraum 37 schließt ein unter dem hinteren Ende des Getrieberaumes 36 liegender Gehäuseraum 38 für die Aufnahme des Mähwerkzeuges 9 an, der ebenfalls in der beschriebenen Weise im wesentlichen nur nach unten napfförmig offen ist.

An der Vorderseite ist der Gehäuseraum 37 von einer aufrechten Vorderwand 39 begrenzt, die das vorderste Ende des Chassis' 3 bzw. des Rasenmähers 1 bilden kann. Die beiden Gehäuseräume 37, 38 sind durch eine aufrechte Trennwand 40 bzw. entsprechende Trennmittel voneinander getrennt, welche nur bis auf einen Spaltabstand an die beiden Flugkreisdurchmesser der Arbeitswerkzeuge 8, 9 angrenzt und sich annähernd über die gesamte Arbeitsbreite des Arbeitswerkzeuges 8 bzw. 9 ununterbrochen durchgehend sowie geschlossen erstreckt. Der Gehäuseraum 7 ist an der Oberseite von einer etwa horizontalen Deckwand 41 begrenzt, welche gleichzeitig die Bodenwand des Getrieberaumes 36 bildet und bis auf eine Öffnung zur Durchführung der Antriebsverbindung geschlossen ist.

Eine entsprechende, etwa in der Höhe der Deckwand 41 liegende Deckwand 42 weist auch der Gehäuseraum 38 auf, wobei durch eine Öffnung in dieser Deckwand 42 die Mähwelle 18 hindurchgeführt ist. An der Oberseite ist der Getrieberaum 36 durch eine haubenförmige, zerstörungsfrei leicht lösbare und vollständig abnehmbare und/oder gelenkig aufklappbare Abdeckung 44 verschlossen, welche beide Gehäuseräume 37, 38 übergreift und auf den Deckwänden 41, 42 mit ihrem Haubenrand aufsitzt. Dadurch sind im wesentlichen alle sich bewegenden Teile der Antriebsverbindung für das Zusatzwerkzeug 8 nach außen annähernd vollständig gegen versehentliche Berührung abgeschirmt und Unfallgefahren weitestgehend vermieden. Am hinteren Ende weist die Abdeckung 44 eine Öffnung bzw. einen Ausschnitt zur Durchführung des Treibriemens 32 auf.

Die um die Umlenkachse 43 drehbaren Umlenk-Riemenscheiben 28, 29 reichen mit ihrem unteren Scheitel annähernd bis zur Oberseite der Deckwand 41 und mit ihrem oberen Scheitel annähernd bis zur Innenseite der Deckwand der Abdeckung 44, so daß der Rasenmäher 1 in seinem vorderen, vor dem Antriebsmotor 22 liegenden Bereich so flach gehalten werden kann, daß dieser Bereich auch unter verhältnismäßig niedriges Buschwerk oder dgl. gefahren und dort mit der Arbeitseinrichtung 6 bearbeitet werden kann.

Zur Außerbetriebsetzung der Arbeitseinrichtung 6 bei laufender Arbeitseinrichtung 7 bzw. laufendem Antriebsmotor 22 ist eine Schaltkupplung 30 in Form einer Reibungskupplung vorgesehen, deren Kupplungsglieder im wesentlichen durch das Riemenrad 23 und den Treibriemen 32 gebildet sein können.

Durch Freigabe des Treibriemens 32 hinsichtlich seiner Zugspannung kann der Treibriemen 32 unter seiner Gewichtskraft aus der als Kupplungsglied 45 vorgesehenen Ringnut des Riemenrades 23 unter radialer Aufweitung axial nach unten auf eine Ablage gleiten, welche die Mähwelle 18 im Spaltabstand wenigstens teilringförmig umgibt. Für diese Lockerung der Riemenspannung 32 bzw. zum Ein- und Auskuppeln ist eine Stelleinrichtung 46 vorgesehen, mit welcher die als Riemen-Spannglieder wirkenden Riemenscheiben 28, 29 quer zur Achse des Kupplungsgliedes 45 und zu ihrer Umlenkachse 43 etwa in Längsrichtung des Rasenmähers 1 verstellt werden können.

Zur Verstellung ist im Bereich des Führungsgriffes der Führungshandhabe 21 eine Handhabe 47 vorgesehen, die über ein Zugorgan, wie einen Bowdenzug, mit einem die Riemenscheibe 28, 29 tragenden, verschiebbaren Schlitten verbunden ist. Dieser Schlitten ist in einer Führung 52 etwa parallel zur Laufebene 10 gegen Federkraft verschiebbar gelagert, wobei die Federkraft so wirken kann, daß sie auf den Treibriemen 32 stets nachspannend wirkt, falls die Schaltkupplung 30 eingerückt ist. werden die Riemenscheiben 28, 29 mit Hilfe der Handhabe 47 in Richtung zum Kupplungsglied 45 verstellt, so gleitet der Treibriemen 32 aus dem Kupplungsglied 45 auf die Ablage. Werden die Riemenscheiben 28, 29 dann wieder für die Einwirkung der Federkraft freigegeben, so spannen die Riemenscheiben 28, 29 den Treibriemen 32 in seiner ausgerückten Stellung, wodurch dieser entlang einer schrägen, rampenartigen Begrenzung der Ablage nach oben und unmittelbar von dieser in das ggf. bereits drehende Kupplungglied 45 gleitet, so daß dann der Treibriemen 32 in seiner Antriebsbewegung kraftschlüssig mitgenommen wird und die Vertikutiereinrichtung 6 antreibt. Auf einer oder beiden Seiten der Riemenscheiben 28, 29 können die Trume des Treibriemens 32 gesondert oder gemeinsam in verhältnismäßig engen Führungsöffnungen geführt sein.

Anstatt einer gegenseitigen Verstellbarkeit der Arbeitsebenen 13, 14 der Arbeitswerkzeuge 8, 9 sind diese quer zur Laufebene 10 nicht oder nur durch Änderung des Durchmessers des Flugkreises 17 gegeneinander verstellbar, weil die Arbeitsachse 11 gegenüber dem Chassis 3 unveränderbar feststehend vorgesehen ist. Die Gehäuseräume 37, 38 sind beiderseits seitlich von Seitenwänden 48 begrenzt, welche an der Außenseite des Chassis' liegen, nämlich im schmaleren Bereich des Zusatzwerkzeuges 8 unmittelbar benachbart zu den Innenseiten der Räder 4 und im verbreiterten Bereich des Mähwerkzeuges 9 in Längsrichtung zwischen den Rädern 4, 5. Um einen verhältnismäßig tiefen Arbeitseingriff des Zusatzwerkzeuges 8 zu ermöglichen, liegen die Unterkanten 49 der Seitenwände 48 im Bereich des Gehäuseraumes 37 höher als die Unterkanten 51 im Bereich des Gehäuseraumes 38, nämlich mindestens etwa so hoch wie der untere Scheitel des Walzenkernes des Zusatzwerkzeuges 8, über welchen Arbeits- bzw. Vertikutierzinken etwa radial frei vorstehen. Die Unterkanten 51 sowie die etwa gleich hoch liegende Unterkante der Trennmittel 40 liegt dagegen etwas tiefer als die Unterseite des Mähwerkzeuges 9, so daß dieses von der Seite und vom Gehäuseraum 37 her nicht zugänglich ist.

Die Arbeitsebenen 13, 14 sind jedoch gemeinsam gegenüber der Laufebene 10 mit einer Höhen-Verstelleinrichtung 50 verstellbar. Zu diesem Zweck ist jedes Rad 4 bzw. 5 an einem zwischen seiner Innenseite und der zugehörigen Seitenwand 48 liegenden Lenker 54 drehbar gelagert, der seinerseits um die Mittelachse einer zur Radachse 15 parallelen Stellwelle 53 gegenüber dem Chassis 3 schwenkbar ist. Die Mittelachse dieser Stellwelle 53 liegt in jedem Einstellzustand vor der Radachse 15, mit geringem Abstand vor dem Flugkreis 17 und etwa in Höhe der Arbeitsachse 11, wobei die Stellwelle 53 in Lagern drehbar gelagert ist, die in den Seitenwänden 48 vorgesehen sind. Die jeweilige Stellwelle 53 verbindet die beiden Lenker 54 der zugehörigen Räder 4 bzw. 5 formschlüssig, so daß beide Lenker 54 gleichlaufend geschwenkt werden.

Nur an einem der Lenker 54 ist mit Abstand oberhalb der Stellwelle 53 bzw. der Radachse 15 ein Zugglied bzw. eine Stellstange 55 angelenkt, die etwa parallel zur Laufebene 10 bzw. zur Vorschubrichtung 16 oberhalb des Mähwerkzeuges 9 nach hinten zu einem Stelltrieb geführt ist. Dieser Stelltrieb ist mit einer an der Oberseite des Chassis' 3 hinter dem Antriebsmotor 22 frei zugänglichen Handhabe 56 betätigbar, mit welcher alle vier Räder 4, 5 gemeinsam um gleiche Stellwege höhenverstellbar sind. Dadurch kann das Zusatzwerkzeug 8 so verstellt werden, daß sein Flugkreis 17 bei höchster Einstellung etwa um die Hälfte seines Durchmessers oberhalb der Laufebene 10 und bei tiefster Einstellung etwa um ein Sechstel bis ein Siebtel seines Durchmessers unterhalb der Laufebene 10 liegt.

Das etwa in Höhe der Arbeitsachse 11 liegende Mähwerkzeug 9 dagegen liegt bei jeder Einstellung mit einem Abstand oberhalb der Laufebene 10, der kleiner als der Durchmesser des Flugkreises 17 ist, wobei jedoch in der höchsten Einstellung sein Abstand von der Laufebene 10 mindestens der Hälfte, zwei Drittel oder drei Viertel des Durchmessers des Flugkreises 17 entspricht. Dadurch ist es auf einfache Weise möglich, im wesentlichen nur mit der Arbeitseinrichtung 6 zu arbeiten.

Die beiden Arbeitswerkzeuge 8, 9 können auch völlig unabhängig voneinander antreibbar sein, z.B. durch gesonderte Motoren und/oder dadurch, daß beide Arbeitswerkzeuge 6, 7 über gesonderte Schaltkupplungen an die Abtriebswelle des Antriebsmotors 22 ausrückbar angekuppelt werden können. Im Falle eines gesonderten Motors für das Arbeitswerkzeug 8 kann dieser vor dem Antriebsmotor 22, seitlich benachbart zum Arbeitswerkzeug 8 in einem gesonderten Gehäuseraum, innerhalb des Walzenkernes des Arbeitswerkzeuges 8 als Achsmotor bzw. achsgleich zum Arbeitswerkzeug 8 und/oder wenigstens teilweise unmittelbar oberhalb des Flugkreises 17 angeordnet sowie als scheibenförmiger Flachmotor bzw. als Umlaufmotor ausgearbildet sein, dessen Gehäuse mit dem Zusatzwerkzeug 8 umläuft. Ferner kann zweckmäßig ein Stelltrieb zur Höhenverstellung des Zusatzwerkzeuges 8 gegenüber dem Chassis 3 vorgesehen sein, wobei zwischen der Höhen-Verstelleinrichtung 50 und den Lagern des Zusatzwerkzeuges 8 eine ggf. auskuppelbare bzw. mechanische Stellverbindung vorgesehen sein kann, durch welche das Zusatzwerkzeug 8 etwa gleichlaufend mit den Rädern 4, 5 gegenüber dem Chassis 3 zu verstellen ist. Dadurch ist es möglich, die Einstellung der Arbeitshöhe des Mähwerkzeuges 9 unabhängig von der Arbeitshöhe des Zusatzwerkzeuges 8 zu verändern und ggf. trotzdem auch den Abstand zwischen der Arbeitsebene 13 und der Laufebene 10 zu verändern bzw. den Abstand zwischen den beiden Arbeitsebenen 13, 14 zu verändern, je nachdem, welche Wirkung der Bearbeitung erwünscht ist. Bei einer Verstellbarkeit des Zusatzwerkzeuges 8 gegenüber dem Chassis 3 könnte die mindestens eine Umlenkung 28 bzw. 29 auch als Spannungs-Ausgleichsglied für den Treibriemen 32 dienen oder zur Erzielung einer im wesentlichen stets gleichen Spannung des Treibriemens 32 bei jeder Einstellung ein gesondertes, an einem oder mehreren Trumen des Treibriemens 32 laufendes Spannglied vorgesehen sein, welches quer zum jeweiligen Trum federnd in beiden entgegengesetzten Richtungen von selbst nachstellt.

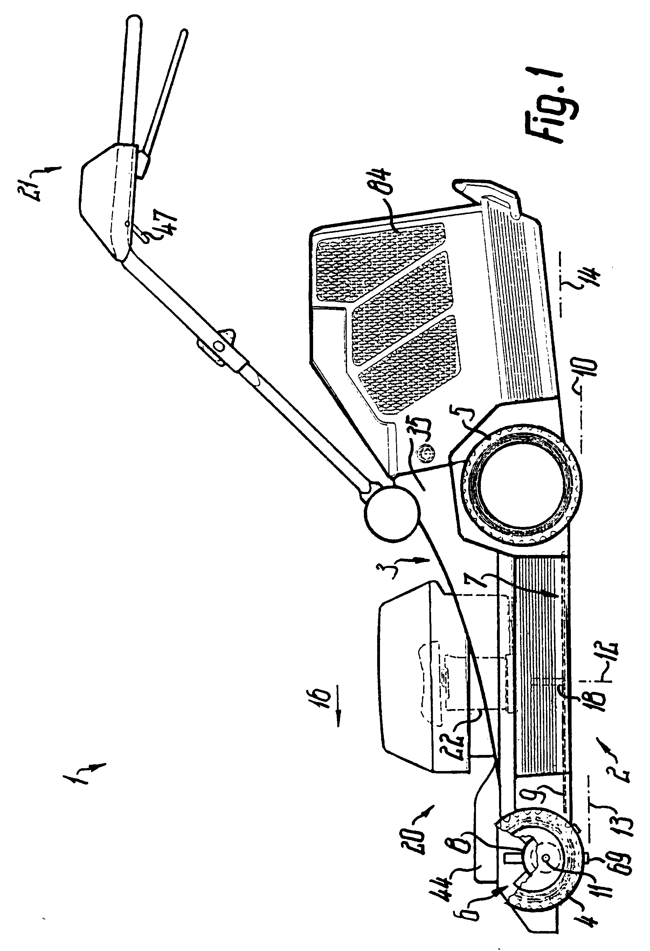

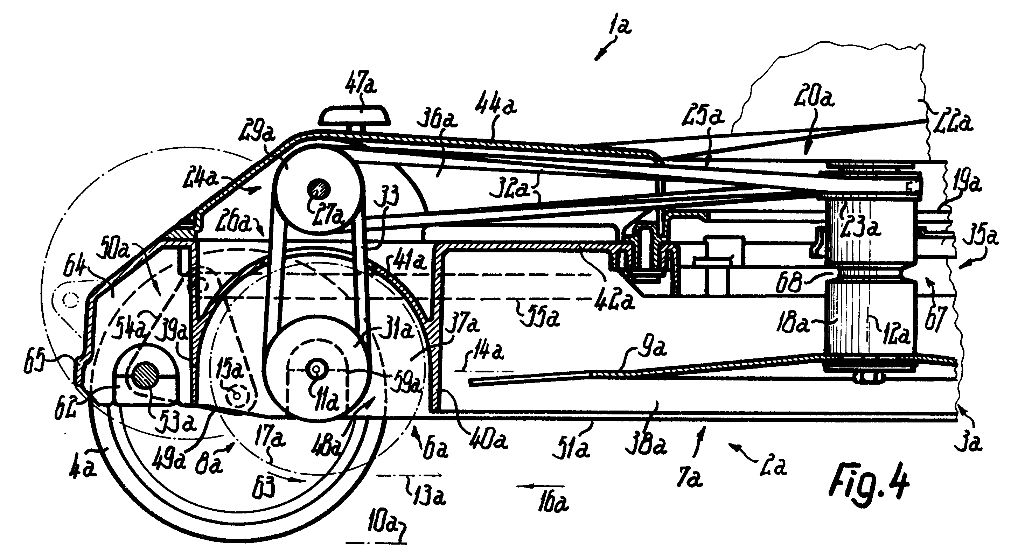

In den Figuren 4 bis 12 sind für einander entsprechende Teile die gleichen Bezugszeichen wie in den Figuren 1 bis 3, jedoch mit unterschiedlichen Buchstabenindizes verwendet, weshalb alle Beschreibungsteile sinngemäß für alle Ausführungsformen gelten und alle Merkmale bzw. Anordnungen der jeweiligen Ausführungsform zusätzlich bzw. alternativ auch jeweils bei mindestens einer weiteren Ausführungsform vorgesehen sein können. Die Ausführungsformen gemäß den Figuren 4 bis 12 sind in den, einzelnen Figuren mit geringfügigen Abwandlungen dargestellt.

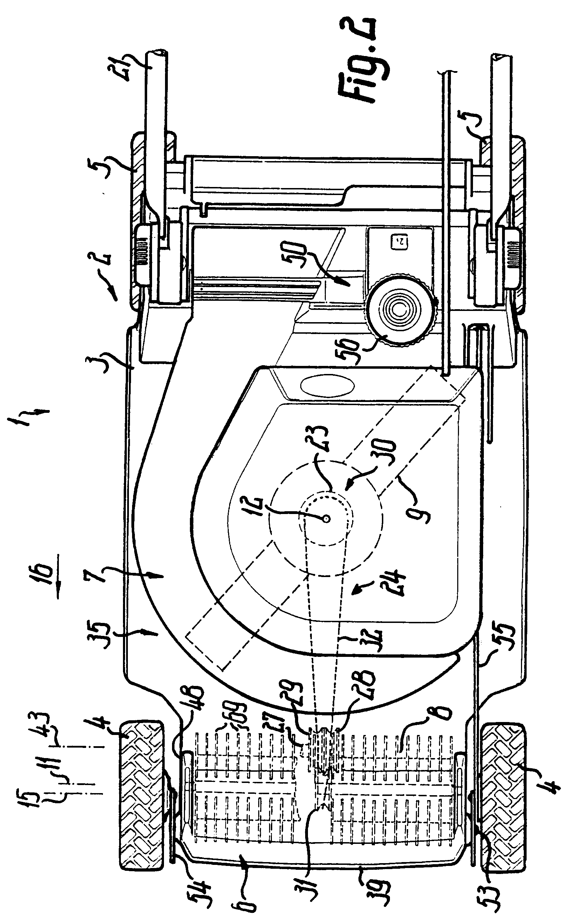

Während bei der Ausführungsform nach den Figuren 1 bis 3 das Getriebe 24 nur einstufig, jedoch in Seitenansicht mit zwei beiderseits der Umlenkungen 28, 29 im Winkel zueinander liegende Bahnstrecken des Übertragungsorganes 32 ausgebildet ist, weist das Getriebe 24a zwei Getriebestufen 25a, 26a mit einer Zwischenwelle 27a und gesonderten Übertragungsorganen bzw. Treibriemen 32a, 33 auf. Die mindestens über die Hälfte der Länge des Arbeitswerkzeuges 8a reichende Zwischenwelle 27a ist in Lagern 34a gelagert, welche auf der Deckwand 41a bzw. 42a befestigt sind und von denen das jeweilige verhältnismäßig nahe benachbart zur zugehörigen Umlenkung 28a bzw. 29a liegt. Die Riemenscheibe 28a liegt etwa in der mittleren Querebene des Zusatzwerkzeuges 8a, während die Riemenscheibe 29a seitlich gegenüber dem zugehörigen Ende des Zusatzwerkzeuges 8a geringfügig nach außen versetzt ist, so daß statt eines Mittenantriebes gemäß Fig. 2 ein Seitenantrieb vorgesehen ist, der seitlich außerhalb der Seitenwand 48a mit der Welle des Zusatzwerkzeuges 8a über den Läufer 31a drehschlüssig verbunden ist.

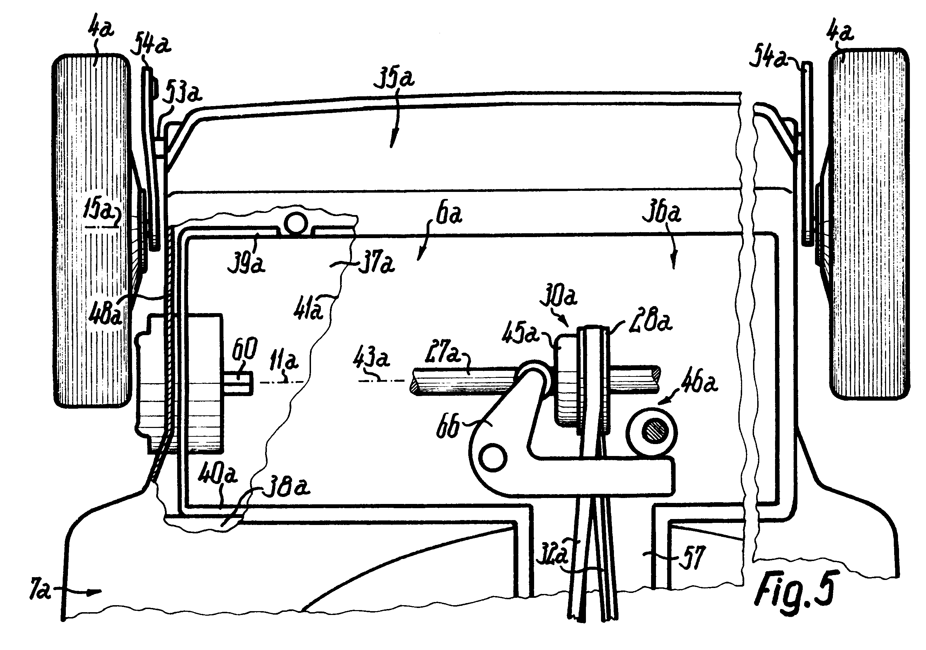

Die zugehörige Getriebestufe 26a liegt im wesentlichen in einen in Fig. 5 nicht näher dargestellten Schacht des Getrieberaumes 36a, wobei dieser Schacht in Seitenansicht gemäß Fig. 4 schmaler als der Gehäuseraum 37a sein kann. Auf einen gegenüber der Länge des Zusatzwerkzeuges 8a entsprechend wesentlich schmaleren Schacht 57 kann auch der Getrieberaum 36a im Bereich des Übertragungsorganes 32a reduziert sein, wobei dieser mit dem Läufer 28a fluchtende Schacht 57 etwa in der Mitte der Breite des Chassis' 3 an der Oberseite der Deckwand 42a zum Läufer 23 geführt und nach Öffnen des Deckels 44a an der Oberseite offen ist. Sofern die Welle des Zusatzwerkzeuges 8a hinsichtlich Torsionsbelastungen verhältnismäßig schwach dimensioniert werden soll, ist es auch denkbar, für beide Enden des Zusatzwerkzeuges 8a im wesentlichen gleichartige Getriebestufen 26a vorzusehen, welche, falls die dadurch bedingte Verringerung der Arbeitsbreite nicht erwünscht ist, auch gegenüber dem jeweiligen Ende nach innen versetzt zwischen jeweils zwei benachbarten Zinkenanordnungen mit dem Zusatzwerkzeug 8a antriebsverbunden sein können.

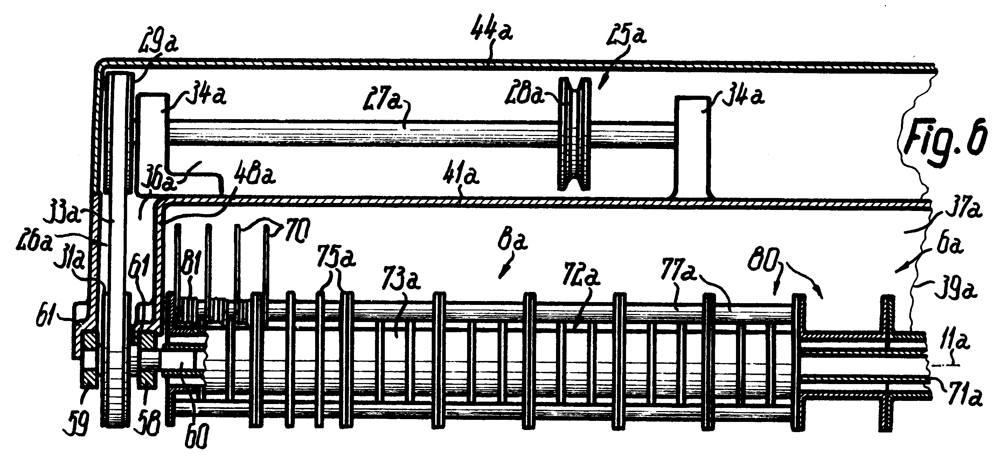

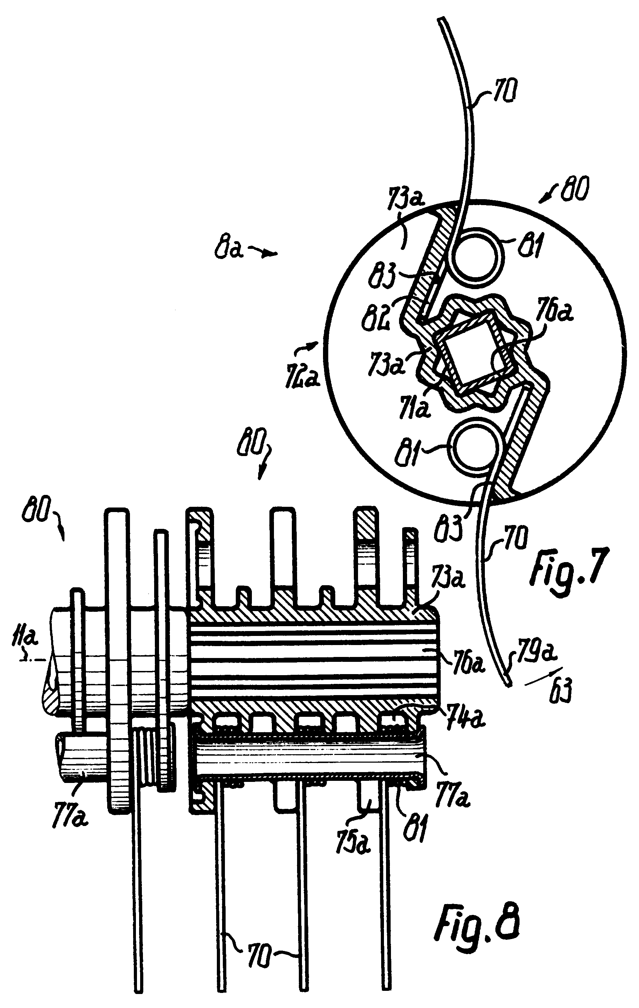

Gemäß Fig. 6 ist die Welle des Zusatzwerkzeuges 8a bzw. die Riemenscheibe 31a unmittelbar benachbart beiderseits ihrer Stirnseiten in jeweils einem Lager 58, 59 gelagert, wobei über das innere Lager bzw. über die Innenseite der Seitenwand 48a ein drehfest mit der Riemenscheibe 31a verbundener Kupplungsdorn 60 vorsteht, mit dem die Welle des Zusatzwerkzeuges 8a durch axiales Aufstecken antriebsverbunden werden kann. Jedes Lager 58, 59 ist in einer geteilten Tragschale des Chassis' 3a befestigt, wobei in Fig. 6 die unteren, zerstörungsfrei leicht lösbaren Tragschalen nicht dargestellt sind, welche den unteren Umfangsbereich der Außenringe der Lager 58, 59 umgeben und eine Baugruppe bilden können, welche den Schachtraum an der Unterseite der Riemenscheibe 31a schließt. Nach Abnahme dieser unteren Tragschalen kann das Zusatzwerkzeug 8a ggf. gemeinsam mit der Riemenscheibe 31a nach unten von dem Chassis 3a abgehoben und gelöst werden.

Im Bereich des Getriebeschachtes für die Getriebestufe 26a ist die Seitenwand 48a doppelwandig, wobei der äußere Wandungsteil die zugehörige seitliche und zum in Fig. 6 nicht näher dargestellten Rad 4a benachbarte Außenseite des Chassis' 3a bildet. Jeder der beiden Wandungsteile trägt eines der Lager 58, 59 und bildet eine entsprechende Tragschale 61. Für eine Höhenverstellbarkeit des Zusatzwerkzeuges 8a gegenüber dem Chassis 3a könnten die Tragschalen 61 und die zugehörigen Gegenschalen auch nach Art von Gleitschlitten in Führungen der zugehörigen Wandungsteile 48a etwa rechtwinklig zur Laufebene 10a verschiebbar geführt sein, so daß auch diese Verstellung wie alle übrigen beschriebenen im wesentlichen stufenlos erfolgen kann. Auch eine Verstellung der Lagerung 59a um eine zur Arbeitsachse 11a parallele Achse ist zur Höhenverstellung denkbar. Die Lagerung 62 der Stellwelle 53a kann in entsprechenden geteilten Tragschalen der Seitenwand 48a befestigt und daher ebenfalls in der beschriebenen Weise derart lösbar sein, daß beide Laufräder 4a gemeinsam mit den Lenkern 54a und der Stellwelle 53a vom Chassis 3a abgenommen werden können.

Um für unterschiedliche Boden- bzw. Vegetationsverhältnisse optimale Arbeitsergebnisse zu erzielen, können beide Werkzeuge unabhängig voneinander gegeneinander sowie unabhängig voneinander gegenüber dem Fahrgestell bzw. Chassis oder den Bodenauflageflächen der Räder bzw. Kufen stufenlos höhenverstellbar und in der jeweils eingestellten Stellung festsetzbar angeordnet sein.

In Fig. 5 ist ein Lagergehäuse für die Riemenscheibe 31a dargestellt, welches seitlich nach außen bis nahe an die Innenseite des benachbarten Rades 4a über die Seitenwand 48a vorsteht und nach innen auch geringfügig über die Innenseite dieser Seitenwand 48a vorragt. Zwischen den beiden etwa parallel und im Abstand voneinander liegenden Teilen dieser Seitenwand 48a kann die Antriebsverbindung zur Zwischenwelle 27a hindurchgehen. Über die Innenseite des Lagegehäuses steht der Kupplungsdorn 60 vor, der zweckmäßig eine von der zylindrischen Ausbildung abweichende Profilform hat, so daß er lediglich durch axiales Zusammenstecken in mehreren Drehlagen drehschlüssig mit dem Zusatzwerkzeug 8a verbunden werden kann.

Das jeweilige Ende des Zusatzwerkzeuges 8a reicht zweckmäßig mit geringstem Spaltabstand unmittelbar bis an die Innenseite der zugehörigen Seitenwand 48a bzw. der zugehörigen Tragschale 61, so daß vermieden ist, daß sich Pflanzenteile zwischen diesen beiden Flächen auf die Welle bzw. den Kupplungsdorn 60 des Arbeitswerkzeuges 8a aufwickeln können. Dieser Wickelschutz kann auch dadurch verbessert werden, daß die Innenseite der Seitenwand 48a das Ende des Zusatzwerkzeuges 8a wenigstens auf einem Teil von dessen Umfang mit einem Kragen eng umgibt, welcher Pflanzenteile gegen radial nach innen gerichtete Bewegungen abweist.

Der Gehäuseraum 37a ist statt im wesentlichen eben bzw. winkelförmig gemäß Fig. 4 hier bogenförmig bzw. annähernd über 180° dem Flugkreis 17a folgend begrenzt, wofür die Deckwand 41a im Querschnitt rinnenförmig ist. Gegenüber eines Drehrichtung in Vorschubrichtung 16a ist eine Drehrichtung 63 des Zusatzwerkzeuges 8a in seinem unteren Arbeitsbereich entgegen Vorschubrichtung 16a bzw. in Richtung zum Mähwerkzeug 7a zu bevorzugen. In dieser Drehrichtung 63 ist die Arbeitsachse 11a geringfügig gegenüber der Mittelachse der Rinnenform des Gehäuseraumes 37a so versetzt, daß die Arbeitsachse 11a geringfügig näher bei der Trennwand 40a als bei der Vorderwand 39a liegt. Dadurch ergibt sich zwischen dem Flugkreis 17a und der Innenseite des Gehäuseraumes 37a ein in Drehrichtung 63 geringfügig erweiterter Spalt, so daß von dem Zusatzwerkzeug 8a in den Gehäuseraum 37a mitgenommene Pflanzenteile durch Gleiten entlang der Innenseiten des Gehäuseraumes 37a nicht verdichtet werden und daher auch nicht zu Verstopfungen bzw. zu steigenden Reibungswerten führen.

Die Unterkante der Trennwand 40a liegt annähernd in Höhe der Arbeitsachse 11a bzw. weniger als ein Fünftel des Flugkreisdurchmessers 17a darunter, so daß sie als Abstreifkante für Pflanzenteile dienen kann, die von dem Zusatzwerkzeug 8a mit nach oben genommen werden. Die Vorderwand 39a und die Trennwand 40a bilden die Schenkel der im Querschnitt U-förmigen Begrenzung des Gehäuseraumes 37a und sind nach oben über den Verbindungsbereich mit der Deckwand 41a hinaus etwa bis in Höhe der annähernd ebenen Deckwand 42a verlängert, welche etwa parallel zur Laufebene 10a anschließt und/oder in Höhe des Scheitels der Deckwand 41a liegt.

Die dem Mähwerkzeug 9a zugekehrte Seite der Trennwand 40a und ggf. auch die davon abgekehrte Seite kann um die Arbeitsachse 12a gekrümmt sein, so daß das Mähwerkzeug 9a wenigstens über einen Teil seines Umfanges in einem napfförmig an seinen Flugkreis angepaßten Gehäuseraum 38a liegt. Der Mantel der Gehäusewandung kann dabei im Bereich einer zur Vorrichtung 16a rechtwinkligen Axialebene der Arbeitsachse 12a einteilig an die Innenseiten der Seitenwände 48a anschließen, und seine Unterkante kann wie die der Trennwand 40a geringfügig oberhalb der Unterkante 51a der Seitenwandungen 48a liegen. Diese Unterkante 51a weist vom Gehäuseraum 38a bis in den Bereich der Lagerung 59a bzw. bis vor dieser etwa konstanten Abstand gegenüber der Laufebene 10a auf und steigt dann erst unter Bildung der erhöhten Unterkante 49a spitzwinklig an.

Vor dem Gehäuseraum 37a befindet sich ein weiterer, im wesentlichen über die zugehörige Breite des Chassis' 3 durchgehender Gehäuseraum 64, welcher im hinteren Bereich durch die Vorderwand 39a und im Abstand vor dieser durch eine weitere Wandung begrenzt ist, welche die vorderste Außenseite des Chassis' 3a bildet und als elastisch rückfedernder Stoßfänger 65 dient, der in Seitenansicht gemäß Fig. 4 ggf. vor den Rädern 4a liegen kann. In Fig. 4 ist mit ausgezogenen Linien die tiefste Stellung der Räder 4a und strichpunktiert deren höchste Stellung dargestellt. Im Gehäuseraum 64 liegt die Stellwelle 53a getrennt vom Gehäuseraum 37a, so daß sie nicht von den vom Zusatzwerkzeug 8a mitgenommenen Pflanzenteilen beaufschlagt wird.

Die auf der Zwischenwelle 27a angeordnete Schaltkupplung 30a weist ein auf der Zwischenwelle 27a axial verschiebbares Kupplungsglied 45a auf, das unmittelbar benachbart zu einer Stirnseite des Antriebsläufers 28a liegt, welcher auch das Gegenkupplungsglied bilden kann. Die Stelleinrichtung 46a weist einen winkelförmigen Stellhebel 66 auf, dessen einer Schenkel im Bereich seines Endes mit einem Druckglied, wie einer Druckrolle, an der vom Gegenkupplungsglied abgekehrten Stirnseite des Kupplungsgliedes 45a anliegt, an dessen anderem Schenkel ein Spannglied, wie ein Spannexzenter, anliegt und der zwischen seinen Schenkeln um eine zur Mittelachse der Schaltkupplung 30a rechtwinklige Achse am Chassis 3a gelagert ist.

Das Spannglied ist mit der Handhabe 47a verbunden, so daß mit dieser das Übertragungsglied 66 so verschwenkt werden kann, daß das Kupplungsglied 45a entweder entgegen Federkraft in Kupplungseingriff gegen die Riemenscheibe 28a gedrückt oder vom Druckglied freigegeben und dadurch unter der Federkraft in Ausrückstellung von der Riemenscheibe 28a abgehoben wird. Von der Riemenscheibe 28a laufen die beiden Trume des Treibriemens 32a unter entsprechender Verschränkung zu den voneinander abgekehren Umfangsseiten der Riemenscheibe 23a, so daß sie im Bereich der beiden Riemenscheiben 23a, 28a in zueinander annähernd rechtwinkligen Ebenen liegen.

Der Rasenmäher 1 kann in vorteilhafter Weise auch einen Fahrantrieb 67 aufweisen, über welchen z.B. nur die hinteren Räder 5 von der Führungshandhabe 21 her manuell ein- und auskuppelbar bzw. in ihrer Geschwindigkeit steuerbar motorisch angetrieben werden können. Gegenüber einem gesonderten Fahrmotor ist ein Antrieb durch den Antriebsmotor 22 zu bevorzugen. Zu diesem Zweck ist auf der Abtriebs- bzw. Mähwelle 18a zwischen dem Antriebsläufer 23a und dem Mähwerkzeug 9a ein weiterer Antriebsläufer 68 in Form beispielsweise eines Riemenrades vorgesehen, von welchem ein nicht näher dargestellter Treibriemen nach hinten zu einer Getriebeanordnung bzw. einer Riemenscheibe geführt ist, über welche die Räder 5 angetrieben werden. Die Übersetzung ist dabei so gewählt, daß bei mindestens einer Vorschubgeschwindigkeit die Umfangsgeschwindigkeit im Bereich des Flugkreises 17a größer als die Vorschubgeschwindigkeit bzw. die Umfangsgeschwindigkeit der Laufflächen der angetriebenen Räder 5 ist, um eine nach hinten gerichtete Relativgeschwindigkeit des Arbeits- bzw. Eingriffsbereiches des Zusatzwerkzeuges 8a gegenüber dem Boden zu gewährleisten.

Das Zusatzwerkzeug 8a kann je nach den Erfordernissen als in den Boden eingreifende Werkzeugglieder 69 bzw. 70 pendelnd gelagerte Flachmaterial- bzw. Flachbandzinken gemäß den Figuren 1 bis 3, 11 und 12 und/oder federnd nachgiebige bzw. gekrümmte Drahtzinken gemäß den Figuren 6 bis 10 aufweisen.

Das Zusatzwerkzeug 8 weist eine hohle bzw. durch einen Abschnitt eines Rohrprofiles gebildete Welle 71 auf, welche zum Walzenkern 72 gehört und die einen Nabenkörper 73 aus Kundststoff oder dgl. durchsetzt. Im Umfang des Nabenkörpers 73 sind über dessen Länge und Umfang verteilt schlitzförmige Aufnahmen 74 für die Arbeitszinken 69 vorgesehen, welche mindestens etwa um die Hälfte der zylindrischen Hüllfläche des Walzenkernes 72 radial über diesen vorstehen und deren Flachquerschnitte in zur Arbeitsachse 11 etwa rechtwinkligen Ebenen liegen. In Axialansicht gemäß Fig. 12 sind mindestens vier, höchstens acht und vorzugsweise sechs Arbeitszinken 69 gleichmäßig über den Umfang verteilt, wobei jeweils eine dieser Anzahl entsprechende Anzahl von Arbeitszinken 69 in einer gemeinsamen Ebene liegen kann oder je Zinkenebene eine kleinere Anzahl, insbesondere zwei entgegengesetzt frei ausragende Arbeitszinken 69 auf beiden Seiten der Arbeitsachse 11 vorgesehen sind.

Der Axialabstand zwischen benachbarten Zinkenebenen liegt zweckmäßig unter 20 mm und in der Größenordnung von 10 mm, wobei der Durchmesser des Flugkreises 17 vorteilhaft mindestens 10 cm und höchstens 14 bzw. 16 cm beträgt und vorzugsweise bei etwa 12 cm liegt. Jede Arbeitszinke 69 ist an ihrem inneren, im wesentlichen axialspielfrei in der Aufnahme 74 liegenden Ende von einem Sicherungsglied 77, z.B. einem Schraubenbolzen, durchsetzt, auf welchem sie um eine zur Arbeitsachse 11 etwa parallele Achse um ein vorbestimmtes Winkelmaß hin und her schwenken sowie durch die bei der Rotation auftretenden Fliehkräfte sich von selbst radial ausrichten kann. Jede Aufnahme 74 ist zwischen zwei durch den Nabenkörper 73 gebildete Nabenflansche 75 begrenzt, welche Ringflansche oder sich nur über einen Teilumfang erstreckende Vorsprünge sein können, so daß jede Arbeitszinke 69 mit einem gesonderten Sicherungsglied 77 zu befestigen ist. In axial zueinander benachbarten Zinkenebenen liegende Arbeitszinken 69 sind von einem Ende des Walzenkernes 72 bzw. des Zusatzwerkzeuges 8 zu dessen anderem Ende fortlaufend gegeneinander um die Arbeitsachse 11 winkelversetzt, so daß an der jeweiligen Umfangsstelle des Zusatzwerkzeuges 8 jeweils nur ein oder zwei frei Enden von Arbeitszinken liegen.

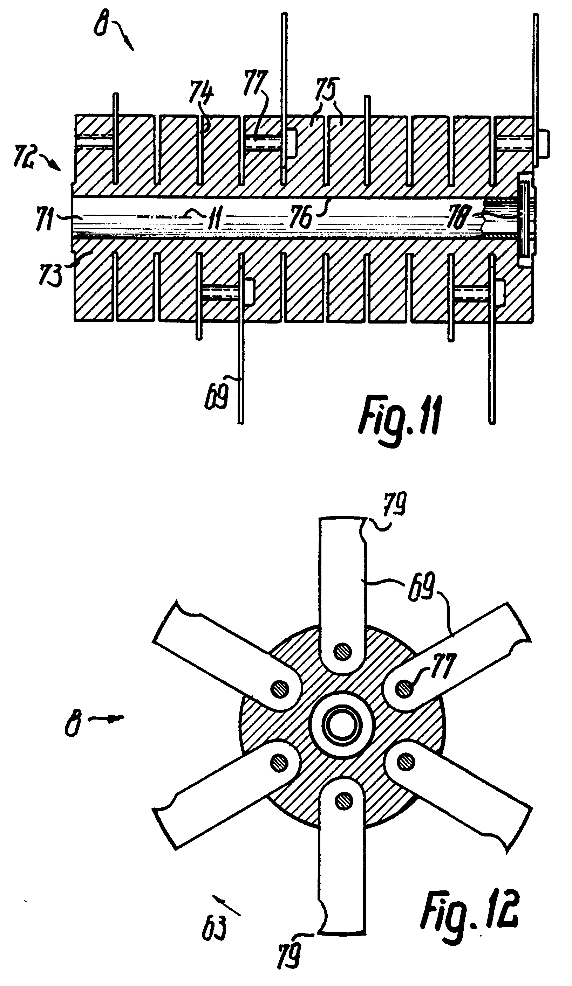

Wie Fig. 12 zeigt, sind die in Drehrichtung 63 vorderen Schmalkanten der Arbeitszinken 69 an deren Enden durch konkav gekrümmte Ausschnitte zu spitzwinklig flankierten Schneiden 79 ausgebildet, so daß sie im Boden nicht nur eine stumpfe Räumwirkung haben, sondern nutartig in den Boden einschneiden und die Pflanzenteile untergreifen können. Der Walzenkern 72 weist eine durchgehende Nabenöffnung 76 auf, in welche die Welle 71 z.B. durch Spritzgußverbund drehschlüssig eingreift. Der Kupplungsdorn 60 des Antriebes kann z.B. ein quer vorstehendes Kupplungselement 78, wie einen Stift, aufweisen, der beim Aufstecken des Walzenkernes 72 in einen Querschlitz der Welle 71 gelangt und dadurch die formschlüssige Drehverbindung herstellt. Der Walzenkörper gemäß Fig. 11 ist für den Mittenantrieb gemäß den Figuren 1 bis 3 vorgesehen, wobei zwei solche Walzenkörper beiderseits der Antriebsscheibe 31 und unmittelbar an deren Stirnseiten anschließend axial aneinander gereiht werden, so daß sich eine wirksame Gesamtlänge des Zusatzwerkzeuges 8 von mindestens 30 bis 40 cm ergibt, weil auch an den freiliegenden End- bzw. Stirnflächen des Nabenkörpers 73 Arbeitszinken 69 angeordnet sind, die nicht in beiderseits flankierten, schlitzförmigen Aufnahmen 74 liegen.

Das Zusatzwerkzeug 8a gemäß den Figuren 6 bis 8 ist aus einer Mehrzahl gleicher bzw. beliebig untereinander austauschbarer Werkzeugkörper 80 gebildet, deren Nabenöffnung 76a so ausgebildet ist, daß sie mit der Welle 71a nach Art einer Zahnwellenverbindung jeweils in einer bestimmten Anzahl von Drehlagen zusammengesetzt werden können, wobei der Winkelabstand zwischen allen benachbarten Drehlagen im wesentlichen gleich ist. Teilt man diesen Winkelabstand durch 360°, so ergibt sich eine Anzahl von Winkelteilungen, und gegenüber dieser Anzahl ist die Anzahl der auf der Welle 71a angeordneten Werkzeugkörper 80 um einen Werkzeugkörper größer. Da hier die Winkelabstände 45° betragen, sind somit neun Werkzeugkörper 80 über die gesamte Arbeitsbreite des Zusatzwerkzeuges 8a aneinander gereiht.

Die Welle 71a ist im Außen- und/oder Innen-Querschnitt im wesentlichen quadratisch, und die Nabenöffnung 76a weist an diesen Außenquerschnitt eng angepaßt ebenfalls quadratische Grundform auf, wobei in der Mitte jeder Quadratseite nochmals eine winkelförmige Vertiefung vorgesehen ist, wie sie sich ergibt, wenn zwei regelmäßige und gleiche Vielecke um die Hälfte des Bogenwinkels jeder Vieleckseite gegeneinander verdreht aufeinander gelegt werden. Teilt man 360° durch die Hälfte dieses Bogenwinkels, so ergibt sich die Anzahl der möglichen Drehlagen.

An dem Nabenkörper 73a sind jeweils in Achsrichtung nebeneinander mindestens zwei oder höchstens vier bzw. sechs, insbesondere drei im wesentlichen gleiche Arbeitszinken 70 angeordnet, wobei auf beiden Seiten der Arbeitsachse 11a zwei annähernd gleiche Reihen mit entgegengesetzt frei ausragenden Arbeitszinken 70 vorgesehen sind. Die Arbeitszinken 70 der beiden Reihen können axial gegeneinander versetzt sein, so daß jeweils eine Arbeitszinke einer Reihe in einer Zinkenebene rotiert, die etwa in der Mitte zwischen benachbarten Arbeitszinken 70 der anderen Reihe liegt.

Die Nabenflansche 75 sind in diesem Fall als Ringflansche ausgebildet, wobei zweckmäßig zwischen jeweils zwei benachbarten sowie im Außendurchmesser und/oder in der Dicke größeren Ringflanschen etwa mittig ein kleinerer Ringflansch vorgesehen ist, welcher zwei benachbarte, ringnutförmige Aufnahmen 74a voneinander trennt. Die axial äußersten der größeren Nabenflansche 75a sind von jeweils miteinander fluchtenden Bohrungen durchsetzt, während der oder die dazwischenliegenden größeren Nabenflansche statt einer Bohrung einen vom Außenumfang ausgehenden, U-förmigen Einschnitt aufweisen können.

In die Bohrungen wird das als Hohlniet ausgebildete Sicherungsglied 77a radialspielfrei eingesteckt, wonach seine Enden so zu Nietköpfen aufgeweitet werden, daß diese an den voneinander abgekehrten Stirnflächen der äußersten Nabenflansche 75a axialspielfrei anliegen. Die radial innere Mantellinie des Sicherungsgliedes 77a kann dann an den Umfangsflächen der kleineren Nabenflansche im wesentlichen spielfrei zusätzlich abgestützt sein.

Von der jeweiligen Reihe greift jeweils nur eine Arbeitszinke 70 in nur eine der beiden Aufnahmen 74a zwischen zwei größeren Nabenflanschen 75a ein, wobei die Zwischenabstände zwischen benachbarten Arbeitszinken 70 dieser Reihe im wesentlichen gleich sind und bei 15 mm liegen kann, so daß benachbarte Zinkenebenen einen Abstand zwischen mindestens 5 und höchstens 10 mm voneinander haben. Dies gilt auch für die einander zugekehrten äußersten Zinkenebenen aneinanderschließender Werkzeugkörper 80.

Die jeweilige Arbeitszinke 70 ist aus Federstahldraht oder dgl. gebogen und bildet im Bereich der Befestigung am Nabenkörper 73a einen Federkörper 81 dadurch, daß der Draht zu einer Schrauben-Torsionsfeder mit axial eng aneinander liegenden Windungen geformt ist. Dieser Federkörper 81 paßt im wesentlichen axialspielfrei in die zugehörige Aufnahme 74a und im wesentlichen radialspielfrei auf das Sicherungsglied 77a, wobei die Richtung der Wendelsteigung so gewählt ist, daß bei Belastung des Zinkenendes 79a entgegen Drehrichtung 63 der Federkörper 81 in Richtung zu einer Verengung belastet wird und sich dadurch mit zunehmender Reibung um den Umfang des Sicherungsgliedes 77a schließt. Das eine Ende des Federkörpers 81 setzt sich tangential in die zugehörige Arbeitszinke 70 fort, während sein anderes Ende tangential in einen entgegengesetzten, jedoch in Axialansicht gemäß Fig. 7 mit dem Übergangsabschnitt der Arbeitszinke 70 etwa fluchtenden Stützschenkel 82 übergeht, welcher wie die Arbeitszinke 70 auf der in Drehrichtung 63 vorderen Mantelseite des Federkörpers 81 liegt.

Mit ihrer in Drehrichtung 63 vorderen Umfangsseite ist die Arbeitszinke 70 wie auch der Stützschenkel 82 an einer gemeinsamen Stützfläche 83 des Nabenkörpers 73a abgestützt, welche annähernd bis Außenumfang des Walzenkernes bzw. der größeren Nabenflansche 75a reichen und durch einen an den Umfang des Nabenkörpers 73a anschließenden stegförmigen Vorsprung gebildet sein kann, welcher von der Innenseite des zugehörigen größeren Nabenflansches 75a axial vorsteht und/oder axial benachbarte größere Nabenflansche 75a als gegenseitige Versteifung verbindet.

Die Arbeitszinke 70 liegt dabei jeweils an einer Stirnseite eines größeren Nabenflansches 75a an, während der Stützschenkel 82 an der gegenüberliegenden Stirnseite eines kleineren Nabenflansches anliegt. Um die Zinkenebenen der beiden Reihen gegeneinander zu versetzen, ist aber auch eine demgegenüber umgekehrte Anordnung der Zinken-Bauteile möglich, wobei die Dicke der größeren Nabenflansche 75a zweckmäßig etwa in der Größenordnung der Breite einer Aufnahme 74a liegt und auch die kleineren Nabenflansche etwa diese Dicke haben können. Ferner können die Federkörper 81 der beiden Reihen je nach den Erfordernissen entgegengesetzte oder gleiche Wendelsteigungen aufweisen.

Des weiteren ist es denkbar, einen Kopf des Sicherungsgliedes 77a unmittelbar am zugehörigen Ende, z.B. am Stützschenkelende eines axial äußersten Federkörpers 81 und nicht, wie dargestellt, an einem Nabenflansch abzustützen, wobei dann die Stirnseite dieses Kopfes etwa in der Ebene der zugehörigen Stirnfläche des Nabenkörpers 73a liegen kann. Der davon entfernte Kopf des Sicherungsgliedes 77a liegt zweckmäßig versenkt in der äußeren Stirnseite des zugehörigen äußersten Nabenflansches 75a, wobei in dieser Stirnfläche auch die zugehörige Stirnseite des Nabenkörpers 73a liegen kann, an welche der nächstfolgende Werkzeugkörper 80 unmittelbar anstoßen oder unter Zwischenlage eines Zwischen- bzw. Distanzringes anschließt.

Die Arbeitszinke 70 ist an ihrer in Drehrichtung 63 vorderen Seite über ihre gesamte frei vorstehende Länge kontinuierlich konkav mit einem Krümmungsradius gekrümmt, der mindestens so groß wie bzw. größer als diese Länge und kleiner als das Doppelte dieser Länge ist. Legt man durch das freie Ende 79a der Arbeitszinke 70 eine Axialebene der Arbeitsachse 11a, so liegt der gesamte, frei vorstehende Teil der Arbeitszinke 70 hinter dieser Axialebene, wobei das freie Ende mit dieser Axialebene einen spitzen, sich zum Walzenkern 72a öffnenden Winkel von weniger als 90 bzw. 30° und mehr als 10° einschließt. Bei Belastung entgegen Drehrichtung 63 kann die Arbeitszinke 70 unter Aufweitung ihrer Krümmung rückfedernd ausweichen, wobei sie dann ggf. von der Stützfläche 83 abhebt, jedoch bei Freigabe peitschenartig zurückkehrt.

Die Zusatzwerkzeuge oder Zinken haben vorzugsweise eine spannungsfreie Leerbewegung über einen Leerweg parallel zu ihrer Arbeits- bzw. der Vorschubrichtung, in der Querrichtung des Werkzeuges bzw. in einer Richtung im wesentlichen rechtwinklig zur Vorschubrichtung, jedoch parallel zur Laufebene und/oder in einer Neigungsrichtung quer zur Längsrichtung der Zinken o.dgl. bzw. seitwärts bezüglich der Arbeitsbewegung. Die jeweilige Leerbewegung ist durch Anschläge formschlüssig begrenzt, welche am Nabenkörper 73a und/oder am Nabenflansch 75a vorgesehen sind, wobei das Gegenglied für diese Anschlagflächen bevorzugt nur der Stützschenkel 82 und nicht die Zinke 70 ist, obwohl auch dies möglich wäre. Dadurch ist das genannte Bewegungsspiel einzeln und gesondert für jedes der Arbeitswerkzeuge 70 vorgesehen, und das Bewegungsspiel kann im wesentlichen zwischen mindestens 2° bis 5° und höchstens 40° bis 50° betragen, wobei das Bewegungsspiel in Umfangsrichtung zweckmäßig größer als das axiale oder seitliche Neigungsspiel ist. Um all diese Bewegungsspiele gemeinsam zu bewirken, kann ein entsprechendes radiales Bewegungsspiel zwischen dem Innenumfang des Naben- bzw. Federkörpers 81 und dem Außenumfang des Sicherungsgliedes 77a sowie gleichzeitig ein axiales Bewegungsspiel des Nabenkörpers 81 zwischen den zugehörigen seitlichen Flanschen 75a und gegenüber dem Glied 77a vorgesehen sein. In den seitlich geneigten Endlagen des Werkzeuges 70 kann dabei immer noch ein geringes radiales Bewegungsspiel des Nabenkörpers 81 gegenüber dem Halteglied 77a vorgesehen sein, weil diese seitlichen Endlagen durch den Nabenkörper 73 oder die einander gegenüberstehenden seitlichen Flächen von Flanschen 75a anschlagbegrenzt sein können.

Da alle Arbeitszinken 70 einer Reihe mit einem gemeinsamen Sicherungsglied 77 gesichert sind, ergibt sich eine einfache Montage. Diese Montage kann so erfolgen, daß die Arbeitszinke 70 und der Stützschenkel 82 durch die Aufweitkraft des Federkörpers 81 vorgespannt bzw. spielfrei an der Stützfläche 83 anliegt oder gegenüber dieser geringes Bewegungsspiel hat.

Der Schenkel 82 kann mit seinem freien Ende im wesentlichen in derselben Richtung wie der Arbeitsschenkel 70 ausragen und kann entgegen der Arbeitsrichtung nach hinten versetzt gegenüber dem radial inneren Hauptabschnitt des Schenkels 70 unter einem spitzen oder stumpfen Winkel zu seinem freien Ende divergieren, welcher größer als die genannten Spielbewegungs-Winkel sind, wobei der Winkel zweckmäßig mindestens 30° und höchstens 90°, insbesondere etwa 45° beträgt. Trifft das Arbeitsende des Werkzeuges 70 während seiner Arbeits- bzw. Vorschubbewegung auf einen Widerstand, wie den Boden, so gelangen die genannten Anschlagflächen in formschlüssigen Anschlageingriff, und das Werkzeug wird gegen diesen Eingriffswiderstand vorgespannt. Wenn danach das so ausgelenkte Werkzeug außer Eingriff mit dem Widerstand gelangt, kehrt es unter der Spannung in einer Gegenrichtung zurück, wird jedoch nicht sofort durch die Rückkehrenergie entsprechend entgegengesetzt gespannt, da es sich frei über den genannten Leerweg bewegen und dabei die Energie lediglich durch Reibung frei abgeben kann, bis es in seiner Bewegung durch formschlüssigen Rückkehranschlag angehalten wird. Dabei werden die Materialien bzw. die Werkzeugglieder 70, 81, 82, 83, 80, 71a, 73a, 75a, 77a selbst wirksam vor Beschädigungen geschützt, die z.B. durch Wechselbelastungen auftreten können. Der Flugkreis des Werkzeugs 8a kann sich dabei selbstrückstellend unter den auftretenden Arbeitsbelastungen ändern.

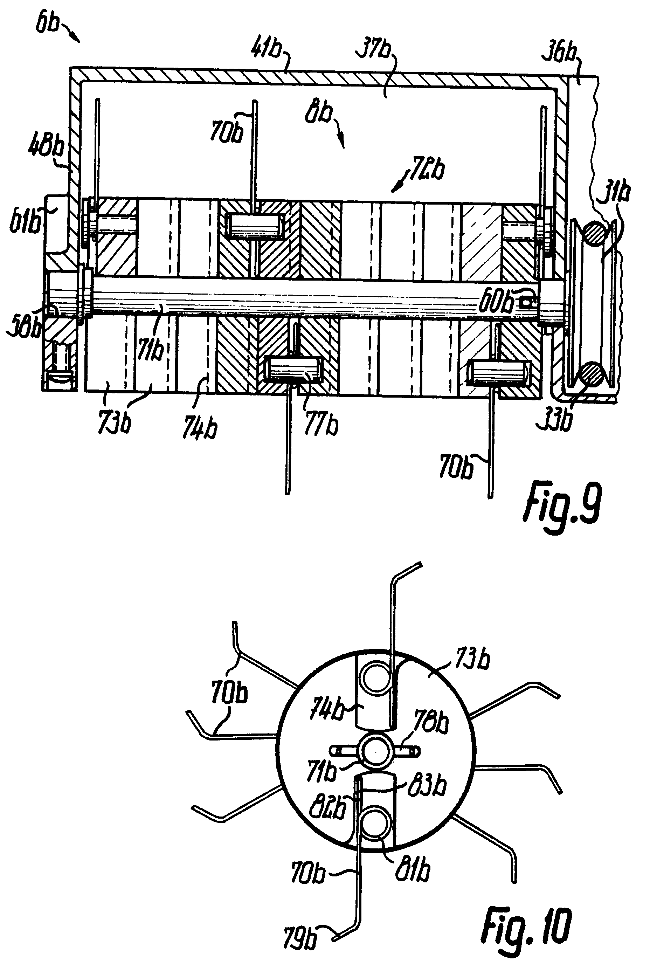

Die Anordnung gemäß Fig. 9 ist für Mittenantrieb gemäß Fig. 2 vorgesehen, wobei erkennbar ist, daß der Schacht 36b für die Aufnahme des Treibriemens 33b und der Riemenscheibe 31b an der Unterseite geschlossen ist. Der Walzenkern 72b ist durch aneinandergereihte, ringscheibenförmige und im wesentlichen gleiche Nabenkörper 73b gebildet, welche auf die Welle 71b unmittelbar aneinander anschließend aufgesetzt sind und jeweils Aufnahmen 74b für nur zwei entgegengesetzt ausragende Arbeitszinken 70b bilden. Diese Aufnahmen 74b werden jeweils zwischen zwei aneinander abgestützten bzw. aneinander anliegenden Stirnflächen zweier benachbarter Nabenkörper 73b begrenzt, wobei eine Aufnahmevertiefung jeweils nur in einer Stirnseite vorgesehen ist, während die andere Stirnseite durchgehend eben bzw. glattflächig ausgebildet ist.

Das jeweilige, durch einen eingepreßten zylindrischen Bolzen gebildete Sicherungsglied 77b, das keine erweiterten Köpfe aufweist, ist in miteinander fluchtende Sacklochöffnungen in den beiden Stirnseiten der benachbarten Nabenkörper 73b eingesetzt und bildet die drehschlüssige Verbindung zwischen diesen beiden Nabenkörpern 73b, so daß diese gegenüber der Welle 71b nicht drehschlüssig festgelegt sein müssen. Die an den äußersten Enden des Walzenkernes 72b vorgesehenen Arbeitszinken 70b sind mit Flachkopfschrauben befestigt, welche im Anschluß an den scheibenförmigen Kopf einen eng an die Innenweite sowie die Länge des Federkörpers 81b angepaßten, gewindefreien Zentrierabschnitt aufweisen.

Wie Fig. 10 zeigt, können in Axialansicht benachbarte Arbeitszinken 70b auch unterschiedliche Umfangsabstände voneinander haben. Ferner gehen hier Arbeitszinken 70b vom Außenumfang des Walzenkernes 72b etwa geradlinig aus, wobei die Enden 79b stumpfwinklig abgewinkelt und ihrerseits wiederum geradlinig sind. Dadurch können die Enden 79b beim Umlauf quer auf den Boden aufsetzen, wonach sie durch federndes Nachgeben der übrigen Arbeitszinke 70b in dieser sich im weiteren Verlauf ändernden Querlage durch den Boden geschleppt werden, bis sie unter Untergreifen der mitbewegten Pflanzenteile in Drehrichtung in ihre Ausgangslage rückfedern und dabei diese Pflanzenteile in Richtung zum Mähwerkzeug 9 bzw. 9a werfen.

Beim Mähen ohne Betrieb der Vertikutiereinrichtung 6 stören die nach unten ragenden Arbeitszinken auch dann weiters nicht, wenn sie geringfügig in den Boden eingreifen und entlang diesem geschleppt werden. Beim Vertikutieren ohne Mähen stört das Mähwerkzeug 9 nicht, weil seine Arbeitsebene oberhalb derjenigen der Vertikutiereinrichtung 6 liegt. In beiden Fällen, wie auch beim gleichzeitigen Mähen und Vertikutieren, kann der Rasenmäher sowohl in Vorschubrichtung 16 als auch entgegen Vorschubrichtung 16 durch die Bedienungsperson geschoben bzw. gezogen bewegt werden, und er kann auch durch Niederdrücken bzw. Anheben der Führungshandhabe 21 mit seinen vorderen Rädern 4 bzw. seinen hinteren Rädern 5 geringfügig angehoben und dann mit den noch in Bodenkontakt befindlichen Rädern als Schwenkzone um eine zur Laufebene 10 rechtwinklige Achse gedreht werden.

Beim gleichzeitigen Vertikutieren und Mähen wird zweckmäßig in Vorschubrichtung 16 gefahren, so daß zuerst die aus dem Boden auszuräumenden Pflanzenteile von der Vertikutiereinrichtung 6 aufgenommen und entweder in dem Arbeitsbereich der nachfolgenden Mäheinrichtung 7 abgelegt oder unmittelbar in das Mähwerkzeug 9 geworfen werden. Dieses nimmt dann die Pflanzenteile gemeinsam mit den von ihm geschnittenen Pflanzenteilen auf und führt sie auf kürzestem Wege einem Sammelbehälter 84 zu, der als Ganzes abnehmbar am hinteren Ende des Chassis' 3 befestigt ist. Bei Bewegung des Rasenmähers entgegen Vorschubrichtung 16 werden zuerst durch die Mäheinrichtung 7 die Pflanzenteile oberhalb der Laufebene 10 geschnitten sowie aus dem Arbeitsbereich der nachfolgenden Vertikutiereinrichtung 6 entfernt, so daß diese dann noch besser in den Boden eingreifen kann und die von ihr herausgelösten Pflanzenteile unmittelbar dem Mäherwerk 9 übergibt, weil zwischen den beiden Gehäuseräumen 37, 38 kein weiterer Gehäuseraum vorgesehen ist.

Dem Mäh- bzw. Zusatzwerkzeug ist ein Förderer, wie ein Strömungs- oder Luftförderer, zugeordnet, z.B. indem das Mähwerkzeug als Förderlüfter ausgebildet ist, welcher die vom Zusatzwerkzeug abgegebenen Partikel über eine Wurfbewegung übernimmt, wobei die oder alle Partikel nicht in unmittelbare Berührung mit dem Förderlüfter gelangen müssen, sondern einer Luftströmung übergeben werden, welche von dem Förderlüfter bzw. dem Zusatzwerkzeug erzeugt wird, so daß sie eine weitere Bewegungsenergie vermittelt bekommen, um die Wurfbewegung weg vom Zusatz- und vom Mähwerkzeug in einer unmittelbar folgenden zweiten Wurfbahn in Richtung bzw. bis zu einem letzten Auslaß des Arbeitsgerätes bzw. Rasenmähers fortzusetzen. Insbesondere können die Enden von Mähflügeln des Mähwerkzeuges untere und/oder obere Lüfterflächen im Winkel zu ihrer Bewegungsebene bzw. zu der dazu parallelen Laufebene bilden, wobei diese strömungserzeugenden Flächen durch gebogene Endabschnitte der Mäharme gebildet sein können, welche gleichzeitig auch Schneidkanten bilden, die im wesentlichen kontinuierlich in die restliche Schneidkante des zugehörigen Mäharmes übergehen bzw. in deren Ebene liegen. Ein Lüfterrotor kann auch gesondert von mindestens einem der genannten Werkzeuge vorgesehen sein, ist jedoch zweckmäßig auf derselben angetriebenen Achse wie dieses Werkzeug bzw. axial unmittelbar benachbart zu diesem Werkzeug und in derselben Kammer wie dieses angeordnet.

Die Vertikutiereinrichtung 6 ist auch dafür geeignet, eventuell liegende Pflanzenteile ohne Loslösung vom Boden aufzustellen, so daß die Mäheinrichtung 9 diese Pflanzenteile nachfolgend beim Schnitt besser erfassen kann. Die Arbeitsebene 13 der Vertikutiereinrichtung 6 kann dabei etwa 5 mm oder mindestens 10 bis 20 mm unter der Laufebene 10 liegen. Die Drehzahl des Zusatzwerkzeuges 6 kann mindestens 2000 bis annähernd 3000 Umdrehungen pro Minute betragen, wodurch die genannten Wirkungen noch weiter verbessert werden und es möglich ist, das Zusatzwerkzeug auch als Kehrwerkzeug bzw. als Bürstenwalze auszubilden.

## Patentansprüche

1. Boden-Bearbeitungsvorrichtung, insbesondere Rasenmäher (1), mit einem eine Laufebene (10) und/oder eine Haupt-Vorschubrichtung (16) bestimmenden Gestell (2), mindestens zwei für das gleichzeitige Arbeiten ausgebildeten Arbeitseinrichtungen (6, 7), nämlich einer Mäheinrichtung (7) und einer Boden-Bearbeitungseinrichtung, wie einer Vertikutiereinrichtung (6), die zur Durchführung ihrer Arbeitsbewegungen in getrennten ersten und zweiten Gehäuseräumen (37, 38) gelagerte und Arbeitsbereiche bestimmende erste und zweite Arbeitswerkzeuge (8, 9), wie wenigstens ein Bodenbearbeitungs-Zusatzwerkzeug (8) und mindestens ein Mähwerkzeug (9), enthalten, sowie mit einem Gehäuse (35), das eine Seitenwandung (48) für den zweiten Gehäuseraum (38) aufweist, dadurch gekennzeichnet, daß die Seitenwandung (48) auch im Bereich des ersten Werkzeuges (8) liegt.

2. Vorrichtung nach Anspruch 1, dadurch gekennzeichnet, daß sie eine Antriebsanordnung (20) zum Antrieb mindestens eines der Arbeitswerkzeuge (8, 9) im wesentlichen unabhängig von der Vorschubbewegung des Fahrgestelles (2) aufweist, daß insbesondere mindestens zwei Arbeitswerkzeuge (8, 9) wenigstens zweier Arbeitseinrichtungen (6, 7) in integrierter Anordnung gemeinsam an dem Fahrgestell (2) angeordnet sind sowie wenigstens ein Zusatzwerkzeug (8) von der Antriebsanordnung (20) antreibbar ist, und daß vorzugsweise zwei Arbeitswerkzeuge (8, 9) in Vorschubrichtung (16) unmittelbar benachbart hintereinander angeordnet sind, und/oder daß in Ansicht auf die Laufebene (10) der Abstand zwischen Arbeitswerkzeugen (8, 9) kleiner als der Arbeitsdurchmesser bzw. Arbeitsradius eines Zusatzwerkzeuges (8) ist, daß insbesondere zwei Arbeitswerkzeuge (8, 9) unmittelbar benachbart zu beiden voneinander abgekehrten Seiten einer einzigen zwischenabschirmung (40) liegen, und daß vorzugsweise die Arbeitswerkzeuge (8, 9) annähernd rechtwinklig zueinander liegende Arbeitsachsen (11, 12) aufweisen.

3. Vorrichtung nach Anspruch 1 oder 2, dadurch gekennzeichnet, daß wahlweise mindestens zwei Arbeitswerkzeuge (8, 9) im wesentlichen unabhängig voneinander in Arbeitseingriff bringbar sind, daß insbesondere der Arbeitsbereich eines Zusatzwerkzeuges (8) in eine gegenüber der Laufebene (10) tiefere Lage überführbar ist und daß vorzugsweise wenigstens ein Arbeitswerkzeug (8, 9) unabhängig von einem weiteren Arbeitswerkzeug (9, 8) antreibbar ist, und/oder daß mindestens zwei Arbeitswerkzeuge (8, 9) zur Verstellung ihrer Arbeitsebenen (13, 14) mit einer Höhen-Verstelleinrichtung (50) gemeinsam gegenüber der Laufebene (10) verstellbar sind, daß insbesondere an einem Fahrgestell (2) zur eigenstabilen Bodenabstützung im Arbeitszustand beider Arbeitswerkzeuge (8, 9) Bodenläufer (4, 5), wie Räder, vorgesehen sowie im wesentlichen alle Bodenläufer (4, 5) gegenüber einem die Arbeitswerkzeuge (8, 9) und die Antriebsanordnung (20) tragenden Chasses (3) des Fahrgestelles (2) höhenverstellbar sind und daß vorzugsweise mindestens zwei Arbeitswerkzeuge (8, 9) über gleiche Stellwege gegenüber der Laufebene (10) verstellbar sind, wobei vordere und hintere Bodenläufer (4, 5) zwangsverbunden gemeinsam gegenüber dem Chassis (3) verstellbar sind.

4. Vorrichtung nach einem der vorhergehenden Ansprüche, dadurch gekennzeichnet, daß mindestens ein Bodenläufer (4, 5) des Gestelles (2) um mindestens eine Stellachse (53) verstellbar ist, daß insbesondere eine Stellachse (53) für einen Bodenläufer (4) des Gestelles (2) in Vorschubrichtung (16) im Abstand vom bzw. vor dem Zusatzwerkzeug (8) vorgesehen ist bzw. etwa in Höhe von dessen Arbeitsachse (11) liegt, und daß vorzugsweise eine Radachse (15) des jeweiligen Bodenläufers (4, 5) über bzw. unter die Arbeitsachse (11) des in Arbeitslage befindlichen Zusatzwerkzeuges (8) einstellbar ist, und/oder daß der tiefste Arbeitsbereich mindestens eines Zusatzwerkzeuges (8) hinter dem vorderen Boden-Abstützbereich des Gestelles (2) liegt, daß insbesondere das Zusatzwerkzeug (8) zwischen vordere seitliche, für den Mähbetrieb vorgesehene Bodenläufer (4) des Gestelles (2) eingreift bzw. wenigstens teilweise nach hinten über die Bodenläufer (4) hinausragt, und daß vorzugsweise hintere, seitliche sowie hinter dem Mähwerkzeug (9) liegende Bodenläufer (5) in Seitenansicht annähernd bis an den Arbeitsbereich eines Mähwerkzeuges (9) reichen.

5. Vorrichtung nach einem der vorhergehenden Ansprüche, dadurch gekennzeichnet, daß mindestens zwei Arbeitswerkzeuge (8, 9) an der Oberseite bzw. seitlich im wesentlichen vollständig abgeschirmt in mindestens einem nach unten offenen Gehäuseraum (37, 38) angeordnet sind, daß insbesondere für mindestens zwei Arbeitswerkzeuge (8, 9) ein gemeinsames Gehäuse (35) mit einer einzigen aufrechten Trennwand (40) zur Unterteilung zweier hintereinander liegender Gehäuseräume (37, 38) vorgesehen ist, und daß vorzugsweise ein Zusatzwerkzeug (8) an seinem Umfang bogenförmig von einer Deckwand (41a) umgeben ist, und/oder daß ein Mähwerkzeug (9) unmittelbar mit einem Antriebsmotor (22) antriebsverbunden und dieser auch zum Antrieb eines Zusatzwerkzeuges (8) vorgesehen ist, daß insbesondere eine Abtriebswelle (18) eines Antriebsmotors (22) bzw. eine Mähwelle (18) eines Mähwerkzeuges (9) über ein wenigstens teilweise oberhalb eines Zusatzwerkzeuges (8) liegendes Getriebe (24) mit dem Zusatzwerkzeug (8) antriebsverbunden ist und daß vorzugsweise das Getriebe (24) im wesentlichen in einem von wenigstens einem der Arbeitswerkzeuge (8, 9) gesonderten Getrieberaum (36) liegt bzw. über eine obere, abnehmbare Gehäuseabdeckung (44 ) zugänglich ist.

6. Vorrichtung nach einem der vorhergehenden Ansprüche, dadurch gekennzeichnet, daß ein Zusatzwerkzeug (8a) über ein mindestens zweistufiges Getriebe (24a) angetrieben ist, daß insbesondere im wesentlichen oberhalb eines Zusatzwerkzeuges (8a) eine zu diesem etwa parallele Zwischenwelle (27a) gelagert ist und daß vorzugsweise eine Getriebestufe (25a) als Winkeltrieb ausgebildet bzw. durch einen Riementrieb mit etwa rechtwinklig zueinander liegenden Umlenkachsen (12a, 27a) für den zugehörigen Treibriemen (32a) gebildet ist, und/oder daß mindestens ein Arbeitswerkzeug (8a, 9a) über eine im wesentlichen unabhängig von seiner Arbeitslage manuell betätigbare Schaltkupplung (30a) antreibbar ist, daß insbesondere ein Zusatzwerkzeug (8a) über eine auf einer Zwischenwelle (27a) o.dgl. angeordnete Schaltkupplung (30a) von der Antriebsanordnung (20a) bzw. einem Mähwerkzeug (8a) abkuppelbar ist und daß vorzugsweise ein Kupplungsglied der Schaltkupplung (30a) durch ein Getriebeglied, wie eine Riemenscheibe (28a), gebildet ist.

7. Vorrichtung nach einem der vorhergehenden Ansprüche, dadurch gekennzeichnet, daß für eine Vorschubbewegung eines Gestelles (2a) und die Arbeitsbewegung mindestens eines der Arbeitswerkzeuge (8a, 9a) eine gemeinsame Antriebsanordnung (20a) vorgesehen ist, daß insbesondere die Vorschubbewegung und die Arbeitsbewegung von einer gemeinsamen Abtriebswelle (18a) angetrieben sind, und daß vorzugsweise ein Zusatzwerkzeug (8a) mit der Vorschubbewegung mitlaufend angetrieben ist, und/oder daß ein Zusatzwerkzeug (8a) in Richtung zu einem Mähwerkzeug (9a) o.dgl. bzw. diesem übergebend arbeitet, daß insbesondere die Arbeitsrichtung des Arbeitsbereiches eines Zusatzwerkzeuges (8a) zu einem Werkzeug (9a) gerichtet ist und daß vorzugsweise ein Werkzeug (9a) zur Entsorgung der von einem Zusatzwerkzeug (8a) gelösten Pflanzenteile o.dgl. bzw. zur Entsorgung in einen Sammelbehälter (84) vorgesehen ist.

8. Vorrichtung nach einem der vorhergehenden Ansprüche, dadurch gekennzeichnet, daß ein Werkzeug, wie ein Zusatzwerkzeug (8a), axial und über den Umfang eines Walzenkernes (72a) verteilt vorstehende bzw. rückfedernde Arbeitszinken (70) o.dgl. aufweist, daß insbesondere ein Werkzeug (8a) aus im wesentlichen gleichen sowie axial aneinandergereihten Werkzeugkörpern (80) zusammengesetzt ist bzw. Werkzeugkörper (80) eines Werkzeuges (8a) unabhängig von gegenseitigem Eingriff in zueinander versetzten Drehlagen gegeneinander gegen Verdrehen zu sichern sind und daß vorzugsweise Werkzeugkörper (80) an, einen Walzenkern (72a) bildenden, Nabenkörpern (73a) Werkzeugnaben (76a) aufweisen, mit welchen sie in mehreren Drehlagen formschlüssig gesichert auf eine Profilwelle (71a) axial aufsteckbar sind, und/oder daß der jeweilige Werkzeugkörper (80) an einem Nabenkörper (73a) mehrere nebeneinander bzw. etwa diametral voneinander abgekehrte Arbeitszinken (70) o.dgl. aufweist, daß insbesondere mehrere nebeneinanderliegende Arbeitszinken (70) o.dgl. radial mit einem gemeinsamen Sicherungsglied (77a), wie einem Hohlniet, gesichert sind und daß vorzugsweise im wesentlichen mindestens eine der Anzahl der durch die jeweilige Werkzeugnabe (76a) gegebenen Drehlagen entsprechende Anzahl von axial aneinandergereihten Werkzeugkörpern (80) ein Werkzeug, wie ein Zusatzwerkzeug (8a), bildet.

9. Vorrichtung nach einem der vorhergehenden Ansprüche, dadurch gekennzeichnet, daß ein Nabenkörper (73a) eines Werkzeuges, wie eines Zusatzwerkzeuges (8a), zwischen Nabenflanschen (75a) Aufnahmen (74a) für Werkzeugglieder, wie Arbeitszinken (70), aufweist, daß insbesondere jedes Werkzeugglied (70) in einer gesonderten Aufnahme (74a) zwischen ringförmigen Nabenflanschen (75a) angeordnet ist und daß vorzugsweise Nabenflansche (75a) von mindestens einem Sicherungsglied (77a) durchsetzt sind.

10. Vorrichtung nach einem der vorhergehenden Ansprüche, dadurch gekennzeichnet, daß ein Werkzeug, wie ein Zusatzwerkzeug (8a), im Arbeits-, wie Mähbetrieb, eines weiteren Werkzeuges das vorderste und um eine zur Laufebene (10a) etwa parallele Achse (11a) drehbare Arbeitswerkzeug (8a) bildet, daß insbesondere ein Zusatzwerkzeug (8a) o.dgl. hinter einer vorderen Gehäusewand (39a, 65 ) des Gestelles (2a) liegt und daß vorzugsweise ein Zusatzwerkzeug (8a) o.dgl. bei höchster Lage über der Laufebene (10a) mit seiner Oberseite annähernd in Höhe der Oberseite mindestens eines Laufrades (4a) liegt.

## Claims

1. Soil working apparatus, particularly a lawnmower (1) with a chassis (2) determining a running plane (10) and/or a main operational advance direction (16), at least two working devices (6, 7) constructed for simultaneous working, namely a mowing device (7) and a ground working device such as a scarifying device (6), which for performing their working movements contain first and second working implements (8, 9) mounted in separate first and second casing chambers (37, 38), such as at least one ground working additional implement (8) and at least one mowing implement (9), as well as with a casing (35) having a side wall (48) for the second casing chamber (38), characterized in that the side wall (48) is also in the area of the first implement (8).

2. Apparatus according to claim 1, characterized in that it has a drive means (20) for driving at least one of the working implements (8, 9) substantially independently of the advance motion of the chassis (2), that in particular at least two working implements (8, 9) of at least two working devices (6, 7) are commonly integrated on the chassis (2) and at least one additional implement (8) is drivable by the drive means (20) and that preferably two working implements (8, 9) are arranged in directly adjacent succession in the advance direction (16) and/or that in a view of the running plane (10) the distance between the working implements (8, 9) is smaller than a working diameter and a working radius of an additional implement (8), that in particular two working implements (8, 9) are located directly adjacent to two remote sides of a single intermediate shield unit (40) and that preferably the working implements (8, 9) have work axes (11, 12) oriented substantially at right angles to one another.

3. Apparatus according to claim 1 or 2, characterized in that, as desired, at least two working implements (8, 9) can be brought into and out of working engagement substantially independently of one another, that in particular the working area of an additional implement (8) can be moved into a position lower than the running plane (10) and that preferably at least one working implement (8, 9) is drivable independently of a further working implement (9, 8) and/or that height setting means (50) are provided for commonly adjusting working planes (13, 14) of at least two working implements (8, 9) with respect to the running plane (10), that particularly on a chassis (2) for an inherently stable ground support in the working state of both working implements (8, 9) there are a plurality of ground supports (4, 5), such as wheels, substantially all the wheels (4, 5) being adjustable in height with respect to a chassis base (3) of the chassis (2) and that preferably at least two working implements (8, 9) are adjustable over identical control paths with respect to the running plane (10), the front and rear ground supports (4, 5) being jointly adjustable in constrained control connection with respect to the chassis base (3).

4. Apparatus according to one of the preceding claims, characterized in that at least one ground support (4, 5) of the chassis (2) is adjustable about at least one control axis (53), that in particular one control axis (53) for a ground support (4) of the chassis (2) is spaced from and located in front of the additional implement (8) in the advance direction (16) and is roughly level with its work axis (11) and that preferably a support axis (15) of the particular ground support (4, 5) is adjustable above or below the work axis (11) of the additional implement (8) when in the working position and/or that the lowermost working zone of at least one additional implement (8) is located behind the front ground support zone of the chassis (2), that in particular the additional implement (8) engages between the front, lateral ground support (4) of the chassis (2) during mowing operation or at least projects partly rearwardly over the ground supports (4) and that preferably rear, lateral ground supports (5), also behind the mowing implement (9), in side view extend approximately into the working area of a mowing implement (9).

5. Apparatus according to one of the preceding claims, characterized in that at least two working implements (8, 9) at the top or laterally are substantially entirely shieldingly received in at least one downwardly open casing chamber (37, 38), that in particular for at least two working implements (8, 9) a common casing (35) with a single upright partition (40) is provided for subdividing two successive casing chambers (37, 38), that preferably an additional implement (8) is circumferentially arcuately surrounded by a cover wall (41a) and/or that a mowing implement (9) is directly drive-connected to a drive motor (22) provided also to drive an additional implement (8), that in particular a driven shaft (18) of a drive motor (22) or a mowing shaft (18) of a mowing implement (9) are drive-connected with the additional implement (8) by means of a gear unit (24) located at least partly above an additional implement (8), and that preferably the gear unit (24) is substantially located in a gear chamber (36) separate from at least one of the working implements (8, 9), and accessible by opening an upper, removable casing cover (44).

6. Apparatus according to one of the preceding claims, characterized in that one additional implement (8a) is driven by means of an at least two-stage gear unit (24a), that in particular substantially above one additional implement (8a) an intermediate shaft (27a) is mounted parallel thereto and that preferably one gear stage (25a) is constructed as a bevel drive, or formed by a belt drive having deflection axes (12a, 27a) roughly at right angles to one another for the associated driving belt (32a) and/or that clutch means (30a) are provided for driving at least one working implement (8a, 9a), said clutch means (30a) being manually operable substantially independently of working positions of said working implement (8a, 9a), said clutch means (30a), located on an intermediate shaft (27a) or the like being provided for decoupling in particular an additional implement (8a) from the drive arrangement (20a), or a mowing implement (8a) and that preferably a coupling member of the clutch (30a) is formed by a gear member, such as a pulley (28a).

7. Apparatus according to one of the preceding claims, characterized in that for an advance motion of a chassis (2a) and the working motion of at least one of the working implements (8a, 9a), a common drive arrangement (20a) is provided, that in particular the advance motion and the working motion are effected by a common driven shaft (18a), and that preferably an additional implement (8a) is driven commonly with said advance motion and/or that an additional implement (8a) works towards or over the mowing implement (9a), that in particular the working direction of the working zone Of an additional implement (8a) towards an implement (9a), and that preferably there is an implement (9a) for disposing of the vegetation released from an additional implement (8a) or for placing in a storage container (84).

8. Apparatus according to one of the preceding claims, characterized in that an implement, such as an additional implement (8a), has projecting, or resilient working prongs (70) or the like axially and circumferentially distributed over a circumference of a roll core (72a), that in particular one implement (8a) is assembled from at least one of substantially identical and axially lined up implement bodies (80), or implement bodies (80) which independently of reciprocal interengagement are securable against rotation in reciprocally displaced rotation positions, and that preferably implement bodies (80) have on hub bodies (73a) forming a roll core (72a) implement hubs (76a) positionally positively secured in several rotation positions by axial plug mounting on a profile shaft (71a) and/or that the particular implement body (80) has on a hub body (73a) several juxtaposed or diametrically remote working prongs (70), or the like that in particular several juxtaposed working prongs (70) or the like are radially secured with a common securing member (77a), such as a hollow rivet and that preferably substantially at least one of the axially lined up implement bodies (80) corresponding to the number of rotation positions given by the implement hub (76a) forms an implement, such as an additional implement (8a).

9. Apparatus according to one of the preceding claims, characterized in that a hub body (73a) of an implement, such as an additional implement (8a), has between hub flanges (75a) receptacles (74a) for implement members, such as working prongs (70), that in particular each tool member (70) is placed in a separate receptacle (74a) between annular hub flanges (75a) and that preferably the hub flanges (75a) are traversed by at least one securing member (77a).

10. Apparatus according to one of the preceding claims, characterized in that an implement, such as an additional implement (8a), forms in working, such as mowing operation of another tool the furthest forward implement (8a) rotatable about an axis (11a) roughly parallel to the running plane (10a), that in particular an additional implement (8a) or the like is located behind a front casing wall (39a, 65 of the chassis (2a) and that preferably an additional implement (8a), or the like in the highest position, is located above the running plane (10a) with its top approximately level with the top of at least one wheel (4a).

## Revendications

1. Dispositif pour le travail du sol, notamment tondeuse (1), avec un châssis-support (2) definissant un plan de course (10) et/ou une direction principale d'avance (16), au moins deux dispositifs de travail (6, 7) réalisés pour le travail simultané, c'est-à-dire un dispositif pour tondre (7) et un dispositif pour le travail du sol, tel qu'un dispositif de défeutrage (6), lesquels contiennent pour l'exécution de leurs mouvements de travail des premiers et deuxièmes outils de travail (8, 9) logés dans des espaces de boîtier (37, 38) premiers et deuxièmes séparés et definissant des domaines de travail, tel qu'au moins un outil additionnel pour le travail du sol (8) et au moins un outil pour tondre (9), ainsi qu'avec un boîtier (35) présentant une paroi latérale (48) pour le deuxième espace de boîtier (38), caractérisé en ce que la paroi latérale (48) se trouve également dans le domaine du premier outil (8).

2. Dispositif selon la revendication 1, caractérisé en ce qu'il présente un arrangement d'actionnement (20) pour l'entraînement d'au moins un des outils de travail (8, 9) essentiellement indépendant du mouvement d'avance du châssis de roulage (2), en ce que notamment au moins deux outils de travail (8, 9) d'au moins deux dispositifs de travail (6, 7) sont disposés ensemble de manière intégrée sur le châssis de roulage (2) ainsi qu'au moins un outil additionnel (8) est à actionner par l'arrangement d'actionnement (20), et en ce que de préférence deux outils de travail (8, 9) sont disposés à proximité immediate directement l'un derrière l'autre en direction d'avance (16), et/ou en ce qu'en vue sur le plan de course (10) l'écart entre des outils de travail (8, 9) est plus petit que le diamètre de travail ou encore que le rayon de travail d'un outil additionnel (8), en ce que notamment deux outils de travail (8, 9) sont situés à proximité directe des deux faces opposés et divergentes d'un seul écran intermédiaire (40), et en ce que de préférence les outils de travail (8, 9) présentent des axes de travail (11, 12) approximativement orthogonaux l'un par rapport à l'autre.

3. Dispositif selon la revendication 1 ou 2, caractérisé en ce que facultativement au moins deux outils de travail (8, 9) peuvent être transportés en prise de travail en substance indépendamment l'un de l'autre, en ce que notamment le domaine de travail d'un outil additionnel (8) peut être trasféré dans une position plus basse par rapport au plan de course (10) et en ce que de préférence au moins un outil de travail (8, 9) peut être actionné indépendamment d'un autre outil de travail (9, 8), et/ou en ce qu'au moins deux outils de travail (8, 9) peuvent être ajustés ensemble par rapport au plan de course (10) pour un ajustage de leurs plans de travail (13, 14) au moyen d'un dispositif de réglage en hauteur (50), en ce que notamment sur un châssis de roulage (2) sont prévus des curseurs au sol (4, 5), tels qe des roues pour un appui au sol autostable pendant l'état de travail des deux outils de travail (8, 9), ainsi que essentiellement tous les curseurs au sol (4, 5) sont réglables en hauteur par rapport à un châssis (3) du châssis de roulage (2), portant les outils de travail (8, 9) et l'arrangement d'actionnement (20) et en ce que de préférence au moins deux outils de travail (8, 9) sont réglables sur des mêmes voies de réglage par rapport au plan de course (10), les curseurs au sol (4, 5) antérieurs et postérieurs étant réglables en commun par rapport au châssis (3), joints de manière forcée.

4. Dispositif selon une des revendications précédentes, caractérisé en ce qu'au moins un curseur au sol (4, 5) du châssis-support (2) est ajustable autour au moins d'un axe de réglage (53), en ce que notamment un axe de réglage (53) est prévu pour un curseur au sol (4) du châssis-support (2) en direction d'avance (16) avec un écart de ou encore devant l'outil additionnel (8) ou encore est situé approximativement à la hauteur de son axe de travail (11), et en ce que de préférence un axe de roue (15) du respectif curseur au sol (4, 5) est ajustable au-dessus ou encore au-dessous de l'axe de travail (11) de l'outil additionnel (8) se trouvant en position de travail, et/ou en ce que le domaine de travail le plus bas au moins d'un outil additionnel (8) est situé derrière le domaine antérieur d'appui au sol du châssis-support (2), en ce que notamment l'outil additionnel (8) fait prise entre des curseurs au sol (4) antérieurs et latéraux du châssis (2), prévus pour le service de la tonte ou encore saille en partie vers l'arrière au-delà des curseurs au sol (4), et en ce que de préférence des curseurs au sol (5) postérieurs, latéraux ainsi que situés derrière l'outil de tonte (9) s'étendent en projection latérale approximativement jusqu'au domaine de travail d'un outil de tonte (9).

5. Dispositif selon une des revendications précédentes, caractérisé en ce qu'au moins deux outils de travail (8, 9) sont disposés au côté supérieur ou encore latéralement en substance de manière totalement écrannée dans au moins un espace de châssis (37, 38) ouvert vers le bas, en ce que notamment pour au moins deux outils de travail (8, 9) est prévu un boîtier (35) commun pourvu d'une seule paroi de séparation (40) verticale pour la subdivision de deux espaces de boîtier (37, 38) situés l'un derrière l'autre, et en ce que de préférence un outil additionnel (8) est entouré à sa circonférence en forme courbée d'une paroi de couverture (41a), et/ou en ce que un outil pour tondre (9) est joint à entraînement avec un moteur d'actionnement (22) et que celui-ci est prévu aussi pour l'actionnement d'un outil additionnel (8), en ce que notamment un arbre commandé (18) d'un moteur d'actionnement (22) ou encore un arbre de tonte (18) d'un outil pour tondre (9) est joint à entraînement avec l'outil additionnel (8) par un mécanisme de transmission (24) situé au moins en partie au-dessus d'un outil additionnel (8) et en ce que de préférence le mécanisme de transmission (24) se trouve en substance dans un espace prévu pour la transmission (36) distinct au moins d'un des outils de travail (8,9) ou encore qu'il est accessible par un couvercle de boîtier (44) supérieur et amovible.

6. Dispositif selon une des revendications précédentes, caractérisé en ce qu'un outil additionnel (8a) est actionné par une transmission (24a) au moins bi-étagée, en ce que notamment, en substance au-dessus d'un outil additionnel (8a) un arbre intermédiaire (27a) est logé approximativement de manière parallèle par rapport à celui-ci et en ce que de préférence un étage de transmission (25a) est réalisé en tant que renvoi d'angle ou encore est formée par une transmission par courroie avec des axes de renvoi (12a, 27a) pour la courroie de transmission (32a) correspondante, approximativement orthogonaux l'un par rapport à l'autre et/ou en ce qu'au moins un outil de travail (8a, 9a) est actionnable par un accouplement débrayable (30a) à commander manuellement en substance indépendamment de son état de service, en ce que notamment un outil additionnel (8a) est à découpler du groupe d'actionnement (20a) ou encore d'un outil pour tondre (8a) au moyen d'un accouplement débrayable (30a) disposé sur un arbre intermédiaire (27a) ou similaire et en ce que de préférence un élément d'accouplement de l'accouplement débrayable (30a) est formé par un élément de transmission, tel qu'une poulie pour courroie (28a).

7. Dispositif selon une des revendications précédentes, caractérisé en ce que pour un mouvement d'avance d'un châssis-support (2a) et pour le mouvement de travail au moins d'un des outils de travail (8a, 9a) est prévue une disposition d'entrainement (20a) commune, en ce que notamment le mouvement d'avance et le mouvement de travail sont actionnés par un arbre moteur (18a) commun, et en ce que de préférence un outil additionnel (8a) est actionné de manière coupée au mouvement d'avance, et/ou en ce que un outil additionnel (8a) travaille en direction d'un outil pour tondre (9a) ou similaire ou encore en remettant à celui-ci, en ce que notamment la direction de travail du domaine de travail d'un outil additionnel (8a) est orientée par rapport à un outil (9a) et en ce que de préférence un outil (9a) est prévu pour le traitement en tant que déchets des parties de plantes ou similaire détachées par un outil additionnel (8a) ou encore pour le transfert dans un collecteur (84).

8. Dispositif selon une des revendications précédentes, caractérisé en ce qu'un outil, tel qu'un outil additionnel (8a) présente des fourchons de travail (70) ou similaire saillants ou encore à retour élastique, distribués axialement et sur la circonférence d'un noyau de cylindre (72a), en ce que notamment un outil (8a) est assemblé de corps d'outil (80) essentiellement égaux ainsi que alignés axialement ou encore que des corps d'outil (80) d'un outil (8a) sont à assurer contre un déplacement angulaire dans des positions angulaires décalées l'une par rapport à l'autre indépendamment d'un engagement réciproque et en ce que de préférence des corps d'outil (80) présentent sur des corps de moyeu (73a), formant un noyau de cylindre (72a), des moyeux d'outil (76a), par lesquels ils sont à embrocher axialement sur un arbre profilé (71a) de manière assurée à engagement positif dans plusieurs positions angulaires, et/ou en ce que le corps d'outil (80) respectif présente sur un corps de moyeu (73a) plusieurs fourchons de travail (70) l'un près de l'autre ou encore approximativement opposés de manière diamétrale et divergente, en ce que notamment plusieurs fourchons de travail (70) ou similaire se trouvant l'un à côté de l'autre sont assurés radialement au moyen d'un élément d'assurage (77a) commun, tel qu'un rivet creux et en ce que de préférence essentiellement au moins un nombre de corps de travail (80) alignés axialement, correspondant au nombre des positions angulaires définies par le respectif moyeu d'outil (76a) forme un outil tel qu'un outil additionnel (8a).

9. Dispositif selon une des revendications précédentes, caractérisé en ce que un corps de moyeu (73a) d'un outil, tel que d'un outil additionnel (8a) présente entre des brides de moyeu (75a) des logements (74a) pour des éléments d'outil, tel que des fourchons de travail (70), en ce que notamment chaque élément d'outil (70) est disposé dans un logement (74a) distinct entre des brides de moyeu (75a) annulaires et en ce que de préférence des brides de moyeu (75a) sont traversées au moins par un élément d'assurage (77a).

10. Dispositif selon une des revendications précédentes, caractérisé en ce qu'un outil, tel qu'un outil additionnel (8a) forme pendant le service, tel que le service de tonte d'un autre outil, l'outil de travail (8a) le plus avancé et rotatif autour d'un axe (11a) approximativement parallèle au plan de course (10a), en ce que notamment un outil additionnel (8a) ou similaire se trouve derrière une paroi de boîtier (39a, 65) antérieure du châssis-support (2a) et en ce que de préférence un outil additionnel (8a) ou similaire dans son positionnement le plus haut au-dessus du plan de course (10a), se trouve avec sa face supérieure approximativement à la hauteur du côté supérieur d'au moins une roue de course (4a).
